# EUROPEAN PATENT SPECIFICATION

(11) **EP 3 781 621 B1**
(45) Date of publication and mention of the grant of the patent: **13.11.2024**
(21) Application number: 19720343.3
(22) Date of filing: 17.04.2019
(51) Int. Cl.: C08K 3/22, C08K 3/38, C08K 5/3492, C08K 5/5313, C08K 7/14, D01F 1/07, D01F 6/60, C08K 5/00, C08K 3/016

(54) **FLAME-RETARDANT POLYAMIDE COMPOSITION**
FLAMMWIDRIGE POLYAMIDEZUSAMMENSETZUNG
COMPOSITION DE POLYAMIDE IGNIFUGE

(30) Priority: 18.04.2018 US 201862659350 P
(43) Date of publication of application: 24.02.2021
(73) Proprietor: INVISTA Textiles (U.K.) Limited, London EC2V 7AF (GB)
(72) Inventor: LANGRICK, Charles Richard, Middlesbrough, Yorkshire TS7 0GA (GB); SARZOTTI, Deborah, Kingston, Ontario K7P 2Z8 (CA)
(74) Representative: Carpmaels & Ransford LLP
(86) International application number: PCT/US2019/027776
(87) International publication number: WO 2019/204370

(56) References cited:
- EP-A1- 3 546 510
- WO-A1-2020/205988
- WO-A1-94/21723
- GB-A- 1 336 085
- US-A1- 2004 076 824
- US-A1- 2009 149 590
- US-A1- 2010 270 577
- US-A1- 2011 184 099
- US-A1- 2014 363 654
- US-B2- 9 090 750
- DATABASE WPI Week 201726, Derwent World Patents Index; AN 2017-22272P, XP002792413

## Description

### BACKGROUND

The incorporation of flame-retardant (FR) additives into polyamide-based compositions is a conventional approach to improve the flame-retardant properties of the composition. Depending upon the mechanical properties desired, such systems may be unfilled or filled with reinforcing or non-reinforcing fillers. There is an interplay, however, between the effect of flame-retardant additives and fillers on the flame-retardant properties of the resin and on the mechanical and processing properties of the resin. Moreover, the amount of flame-retardant additives is usually a significant proportion of the overall composition, and this proportion tends to increase as the level of filler increases; for example, some unfilled systems may be composed of nearly 95 wt.% polyamide, whilst, for example, a 25 wt.% glass filled flame-retardant polyamide may be composed of less than 40 wt.% polyamide. US 2014/363654 discloses polyamide compositions with glass fibers and a flame retardant. Therefore, whether filled or unfilled, it can be a challenge to design a polyamide system having both desired flame-retardant properties and acceptable processing properties in combination with suitable mechanical properties.

Furthermore, and especially challenging as the total amount of all non-polyamide components in the resin system increases, acceptable melt processing properties at both the compounding and molding stages is required. In addition to desired flame-retardant properties, mechanical properties, and processing properties, there may also be other desired properties, such as and without limitation, electrical properties (e.g., dielectric strength, volume and surface resistivity, and comparative tracking resistance), surface gloss, color, thermal stability, UV stability, corrosivity, resistance to migration, chemical resistance, toxicity, as well as non-technical requirements such as cost efficiency. To achieve these other desired properties, other functional additives can be incorporated into the flame-retardant composition, whose presence may also influence the flame-retardant properties, mechanical properties, and processing properties.

One challenge to one skilled in the art is to discover means to achieve these diverse requirements when the interplay between the components in the resin system may counter each other's effects in achieving these requirements. So even with the variety of flame-retardant additives and functional additives commercially available, it is not a predictable pathway for a person having ordinary skill in the art to find a combination of ingredients in unfilled or filled resins which, together, can achieve a desired flame-retardant property (for instance a V-0 rating in a 0.4 mm thick flammability bar in the Underwriters' Laboratories Test No. UL 94 testing) in combination with mechanical, processing, and other needed properties.

### SUMMARY

The present invention provides a flame-retardant polyamide composition that includes nylon 66 that is 30 wt% to 99 wt% of the composition. The nylon 66 has an RV of ≥20 to ≤33 as measured in an 8.4 wt% solution in 90% formic acid. The composition also includes one or more flame-retardant additives. The flame-retardant additives are preferably 1 wt% to 50 wt% of the composition. The composition is substantially free of poly(arylene ether) and non-polyamide copolymers thereof, and has a flame retardancy rating at 0.4 mm of V-2, V-1, or V-0 as measured by Underwriters' Laboratories Test No. UL 94, wherein the one or more flame-retardant additives are halogen-containing flame-retardant additives, halogen-containing flame-retardant additives with synergists, phosphorus-containing flame-retardant additives, inorganic flame-retardant additives, nitrogen-containing flame-retardant additives, nitrogen-containing flame-retardant additives with synergists, or a combination thereof, wherein the nitrogen-containing flame-retardant additives are selected from melamine cyanurate, melamine polyphosphate, melamine pyrophosphate, or mixtures thereof.

In various aspects, the present invention provides a flame-retardant polyamide composition including nylon 66 that is 80 wt% to 99 wt% of the composition The nylon 66 has an RV of ≥20 to ≤33. The composition also includes one or more flame-retardant additives that are 1 wt% to 20 wt% of the composition, the one or more flame-retardant additives chosen from melamine cyanurate, aluminum diethylphosphinate, melamine polyphosphate, bromopolystyrene, antimony trioxide, dehydrated zinc borate, and a combination thereof. The composition is substantially free of glass fibers, and the composition has a flame retardancy rating at 0.4 mm of V-2, V-1, or V-0 as measured by Underwriters' Laboratories Test No. UL 94. The composition can have a flame retardancy rating at 0.4 mm of V-0 as measured by Underwriters' Laboratories Test No. UL 94.

In various aspects, the present invention provides a flame-retardant polyamide composition including nylon 66 that is 30 wt. % to 80 wt% of the composition. The nylon 66 has an RV of ≥20 to ≤33. The composition also includes one or more flame-retardant additives that are 10 wt% to 50 wt% of the composition, the one or more flame-retardant additives chosen from melamine cyanurate, aluminum diethylphosphinate, melamine polyphosphate, bromopolystyrene, antimony trioxide, dehydrated zinc borate, and a combination thereof. The composition also includes a glass fiber reinforcing filler that is about 1 wt% to about 40 wt% of the composition. The composition has a flame retardancy rating at 0.4 mm of V-2, V-1, or V-0 as measured by Underwriters' Laboratories Test No. UL 94. The composition can have a flame retardancy rating at 0.4 mm of V-0 as measured by Underwriters' Laboratories Test No. UL 94

In various aspects, the present invention provides a method of making the flame-retardant polyamide composition, such as any embodiment of the flame-retardant polyamide composition described herein. The method includes combining the polyamide with the one or more flame-retardant additives to form the flame-retardant polyamide composition.

In various aspects, the flame-retardant composition including the polyamide and the flame-retardant additive can have certain advantages over other polyamide compositions, at least some of which are unexpected. For example, in some aspects, the flame-retardant polyamide composition can have a combination of high strength and good processability with good flame-retardant properties. In various aspects, it is possible to incorporate one or more flame-retardant additives to produce a flame-retardant polyamide composition with surprising ease of processability both during manufacture and subsequent melt processing by using a polyamide having a relative viscosity (RV) from ≥ 20 to ≤ 33 using production assets for which manufacture or subsequent processing would fail if used for polyamides outside of this RV range due to resultant poor processability.

In some aspects, the one or more flame-retardant additives can have a greater flame-retarding effect in the flame-retardant polyamide composition of the present invention as compared to other polyamide compositions including the same or greater concentration of the one of more flame-retardant additives. In some aspects, a particular concentration of the one or more flame-retardant additives in the flame-retardant polyamide composition of the present invention results in a greater flame-retardant effect, as measured by the UL 94 test rating, when used with a polyamide having an RV from ≥ 20 to ≤ 33, as compared to an otherwise identical polyamide composition including the same or greater concentration of the one or flame-retardant additives but including a polyamide having an RV that is < 20 or > 30.

Typically, lowering the concentration of one or more fire-retardant additives in a polyamide composition results in a decrease in the fire-retardancy of the polyamide composition. However, in some aspects, a lower concentration of the one or more flame-retardant additives in the flame-retardant polyamide composition of the present invention can be used to accomplish the same or better flame-retardant property as an otherwise identical polyamide composition including the same or greater concentration of the one or flame- retardant additives but including a polyamide having an RV that is < 20 or > 30.

### DETAILED DESCRIPTION

In the methods described herein, the acts can be carried out in any order without departing from the principles of the invention, except when a temporal or operational sequence is explicitly recited. Furthermore, specified acts can be carried out concurrently unless explicit claim language recites that they be carried out separately. For example, a claimed act of doing X and a claimed act of doing Y can be conducted simultaneously within a single operation, and the resulting process will fall within the literal scope of the claimed process.

The term "substantially free of' can mean having a trivial amount of, such that a composition is about 0 wt% to about 5 wt% of the material, or about 0 wt% to about 1 wt%, or about 5 wt% or less, or less than, equal to, or greater than about 4.5 wt%, 4, 3.5, 3, 2.5, 2, 1.5, 1, 0.9, 0.8, 0.7, 0.6, 0.5, 0.4, 0.3, 0.2, 0.1, 0.01, or about 0.001 wt% or less, or about 0 wt%.

The polymers described herein can terminate in any suitable way. In some aspects, the polymers can terminate with an end group that is independently chosen from a suitable polymerization initiator, -H, -OH, a substituted or unsubstituted (C₁-C₂₀)hydrocarbyl (e.g., (C₁-C₁₀)alkyl or (C₆-C₂₀)aryl) interrupted with 0, 1, 2, or 3 groups independently selected from -O-, substituted or unsubstituted -NH-, and -S-, a poly(substituted or unsubstituted (C₁-C₂₀)hydrocarbyloxy), and a poly(substituted or unsubstituted (Ci-C₂₀)hydrocarbylamino).

### Composition including a polyamide and one or more flame-retardant additives.

Various aspects of the present invention provide a flame-retardant polyamide composition. The composition includes a polyamide that is 30 wt % to 99 wt% of the composition. The polyamide has a relative viscosity (RV) of ≥20 to ≤33. The composition also includes one or more flame-retardant additives. The composition can be substantially homogeneous, such that the polyamide, one or more flame-retardant additives, and any other components such as fillers, are evenly distributed with regard to one another in the composition. The composition can have good flame-retardant properties. For example, the composition can have a flame retardancy rating at 0.4 mm of V-1 or better (e.g., V-1 or V-0), or of V-0, as measured by Underwriters' Laboratories Test No. UL 94, as described herein. In some aspects, the RV range of the polyamide can increase the effectiveness of the one or more flame-retardant additives. For example, another composition that includes a polyamide having a different RV (e.g., an RV of <20 or >33 instead of an RV of ≥20 to ≤33) but is otherwise identical can have less flame-retardancy as measured by Underwriters' Laboratories Test No. UL 94. In various aspects, another composition that includes a polyamide having a different RV (e.g., an RV of <20 or >33 instead of an RV of ≥20 to ≤33) but is otherwise identical can require a greater concentration of the one or more flame-retardant additives to achieve the same flame-retardancy as measured by Underwriters' Laboratories Test No. UL 94.

An aspect of this disclosure is that by using a polyamide having a relative viscosity (RV) from ≥ 20 to ≤ 33 in combination with the one or more flame-retardant additives, it is possible to either (i) improve on the flame-retardant properties, or classification (e.g., UL 94 test rating), of the flame-retardant polyamide system as compared to using a polyamide having an RV outside of this range; or (ii) if the flame-retardant classification is at its highest level or is already at a desired level then it is possible to reduce the amount of the one or more flame-retardant additives.

Another aspect of this disclosure is that it is possible to incorporate one or more flame-retardant additives to produce a flame-retardant polyamide resin that is processable both during manufacture and subsequent melt processing by using a polyamide having a relative viscosity (RV) from ≥ 20 to ≤ 33 using production assets that, if used using polyamide outside of this range, manufacture and/or subsequent processing would fail.

In addition to the good flame-retardant properties in combination with efficient use of the one or more flame-retardant additives, and the good processability, the flame-retardant polyamide composition can also have good mechanical properties. In some aspects, the composition can have a tensile strength at break of 50 MPa to 500 MPa as measured by the method of ISO 527, or 80 MPa to 200 MPa, or 50 MPa or less, or less than, equal to, or greater than 60 MPa, 65, 70, 75, 80, 85, 90, 95, 100, 110, 120, 130, 140, 150, 160, 180, 200, 225, 250, 275, 300, 350 MPa, or 400 MPa or more. In some aspects, the composition can have a tensile modulus of 1,000 MPa to 15,000 MPa as measured by the method of ISO 527, or 3,500 MPa to 13,000 MPa, or 1,000 MPa or less, or less than, equal to, or greater than 2,000 MPa, 3,000, 4,000, 5,000, 6,000, 7,000, 8,000, 9,000, 10,000, 11,000, 12,000, 13,000, 14,000, or 15,000 MPa or more.

The flame-retardant polyamide composition can be in any suitable physical form. The flame-retardant polyamide composition can be a in the form of a flame-retardant fiber.

### Polyamide.

The polyamide is 30 wt % to 99 wt% of the composition. For example, the polyamide can be about 35 wt% to about 96 wt%, or about 35 wt% to about 95 wt%, or about 30 wt% or less, or less than, equal to, or greater than about 35 wt%, 40, 45, 50, 55, 60, 65, 70, 75, 80, 85, 90, 95, 96, 97, 98, or about 99 wt% or more. A composition that is free of glass fibers or free of other structural fillers can have a higher proportion of the polyamide therein, such as about 70 wt% to about 99 wt% of the composition, or about 85 wt% to about 96 wt%, or about 70 wt% or less, or less than, equal to, or greater than about 72 wt%, 74, 76, 78, 80, 82, 84, 86, 88, 90, 92, 94, 96, 97, 98, or about 99 wt% or more. A composition that includes a structural filler such as glass fibers can have a lower proportion of the polyamide therein, such as about 30 wt% to about 80 wt% of the composition, or about 35 wt% to about 65 wt% of the composition, or about 30 wt% or less, or less than, equal to, or greater than about 32 wt%, 34, 36, 38, 40, 42, 44, 46, 48, 50, 52, 54, 56, 58, 60, 62, 64, 66, 68, 70, 72, 74, 76, 78, or about 80 wt% or more.

Polyamides and copolyamides are derived from diamines and dicarboxylic acids and/or from aminocarboxylic acids or the corresponding lactams.. In various aspects, the composition can be free of polyamide copolymers formed from flame-retardant monomers, such as phosphorus-containing monomers, such as 9,10-dihydro-9-oxa-10-phosphaphenanthrene-10-oxide (DOPO). In various aspects, the polyamide can be free of melamine cyanurate polyamide composites formed from adipic acid-melamine salts and cyanuric acid-hexane diamine salts, or formed by polymerization of the polyamide in the presence of melamine cyanurate.

For example, the polyamide can be formed from monomers chosen from tetramethylenediamine, hexamethylenediamine, 2-methylpentamethylenediamine (D), diaminodecane, diaminododecane, 2,4,4-trimethylhexamethylenediamine, 2,2,4-trimethylhexamethylenediamine, adipic acid, azelaic acid, sebacic acid, dodecanedioic acid, iso- and/or terephthalic acid, ε-caprolactam, undecanlactam, laurolactam, and mixtures thereof. Monomers may also include those which may contribute to the flame-retardant behavior of the whole system, such as a phosphorus-containing monomer, for example, bis(2-carboxyethyl)phenylphosphineoxide.

The polyamide can be formed from monomers including hexamethylenediamine and adipic acid. The polyamide is nylon 66. The polyamide is nylon 66 and the composition can optionally be substantially free of all other polyamides (e.g., nylon 66 can be the only polyamide used to form the composition).

Polyamides can be manufactured by polymerization of dicarboxylic acids and diacid derivatives and diamines. In some cases, polyamides may be produced via polymerization of aminocarboxylic acids, aminonitriles, or lactams. The dicarboxylic acid component is suitably at least one dicarboxylic acid of the molecular formula HO₂C-R¹-CO₂H; wherein R¹ represents a divalent aliphatic, cycloaliphatic or aromatic radical or a covalent bond. R¹ suitably includes from 2 to 20 carbon atoms, for example, 2 to 12 carbon atoms or 2 to 10 carbon atoms. R¹ may be a linear or branched (e.g., linear) alkylene radical including 2 to 12 carbon atoms, or 2 to 10 carbon atoms, for example 2, 4, 6 or 8 carbon atoms, an unsubstituted phenylene radical, or an unsubstituted cyclohexylene radical. Optionally, R¹ may contain one or more ether groups. For example, R¹ is an alkylene radical, for example a linear alkylene radical, including 2 to 12 carbon atoms, or 2 to 10 carbon atoms, for example, 2, 4, 6, or 8 carbon atoms.

Specific examples of suitable dicarboxylic acids can include hexane-1,6-dioic acid (adipic acid), octane-1,8-dioic acid (suberic acid), decane-1,10-dioic acid (sebacic acid), dodecane-1,12-dioic acid, 1,2-cyclohexanedicarboxylic acid, 1,3-cyclohexanedicarboxylic acid, 1,4-cyclohexanedicarboxylic acid, 1,2-cyclohexanediacetic acid, 1,3-cyclohexanediacetic acid, benzene-1,2-dicarboxylic acid (phthalic acid), benzene-1,3-dicarboxylic acid (isophthalic acid), benzene-1,4-dicarboxylic acid (terephthalic acid), 4,4'-oxybis(benzoic acid), and 2,6-naphthalene dicarboxylic acid. A suitable dicarboxylic acid is hexane-1,6-dioic acid (adipic acid).

The diamine component can be at least one diamine of the formula H₂N-R²-NH₂, wherein R² represents a divalent aliphatic, cycloaliphatic or aromatic radical. R² can include from 2 to 20 carbon atoms, for example, 4 to 12 carbon atoms, or 4 to 10 carbon atoms. R² may be a linear or branched (e.g., linear) alkylene radical including 4 to 12 carbon atoms, or 4 to 10 carbon atoms, for example, 4, 6, or 8 carbon atoms, an unsubstituted phenylene radical, or an unsubstituted cyclohexylene radical. Optionally, R² may contain one or more ether groups. For example, R² can be an alkylene radical, for example, a linear alkylene radical, including 4 to 12 carbon atoms, or 4 to 10 carbon atoms, for example, 2, 4, 6, or 8 carbon atoms.

Specific examples of suitable diamines include tetramethylene diamine, pentamethylene diamine, hexamethylene diamine, octamethylene diamine, decamethylene diamine, dodecamethylene diamine, 2-methylpentamethylene diamine, 3-methylpentamethylene diamine, 2-methylhexamethylene diamine, 3-methylhexamethylene diamine, 2,5-dimethylhexamethylene diamine, 2,2,4-trimethylhexamethylene diamine, 2,4,4-trimethylhexamethylene diamine, 2,7-dimethyloctamethylene diamine, 2,2,7,7-tetramethyloctamethylene diamine, 1,2-cyclohexanediamine, 1,3-cyclohexanediamine, 1,4-cyclohexanediamine, 4,4'-diaminodicyclohexylmethane, benzene-1,2-diamine, benzene-1,3-diamine and benzene-1,4-diamine. A suitable diamine is hexamethylene diamine.

The aromatic diacid is suitably at least one diacid of the formula HO-C(O)-R³-C(O)-OH, wherein the variable R³ is substituted or unsubstituted aryl, such as phenyl. In one aspect, the aromatic diacid is terephthalic acid.

The polyamide resin can further include a catalyst. In one aspect, the catalyst can be present in the polyamide resin in an amount ranging from 10 ppm to 1,000 ppm by weight. In another aspect, the catalyst can be present in an amount ranging from 10 ppm to 300 ppm by weight. The catalyst can include, without limitation, phosphorus and oxyphosphorus compounds, such as phosphoric acid, phosphorous acid, hypophosphorous acid, hypophosphoric acid, arylphosphonic acids, arylphosphinic acids, salts thereof, or mixtures thereof. In one aspect, the catalyst can be sodium hypophosphite (SHP), manganese hypophosphite, sodium phenylphosphinate, sodium phenylphosphonate, potassium phenylphosphinate, potassium phenylphosphonate, hexamethylenediammonium bis-phenylphosphinate, potassium tolylphosphinate, or mixtures thereof. In one aspect, the catalyst can be sodium hypophosphite (SHP).

In various aspects, the flame-retardant polyamide composition can be substantially free of poly(arylene ether), non-polyamide copolymers thereof, or a combination thereof. For example, the composition can be substantially free of poly(phenylene ether), non-polyamide copolymers thereof such as polysiloxane block copolymers of poly(phenylene ether), or a combination thereof. In various aspects, the polyamide composition can be substantially free of styrenic copolymers, polyolefins, non-polyamide polyesters, derivatives thereof, or a combination thereof. The composition can be substantially free of styrene-ethylene-butadiene-styrene (SEBS), non-polyamide polymers, derivatives thereof, or a combination thereof. The composition can be substantially free of maleated styrene-hydrogenated butadiene-styrene. Any one or more of poly(arylene ether), non-polyamide copolymers thereof, styrenic copolymers, polyolefins, non-polyamide polyesters, non-polyamide polymers, and derivatives thereof, can form a trivial amount of the composition, such as about 0 wt% to about 5 wt% of the composition, or about 0 wt% to about 1 wt%, or about 5 wt% or less, or less than, equal to, or greater than about 4.5 wt%, 4, 3.5, 3, 2.5, 2, 1.5, 1, 0.9, 0.8, 0.7, 0.6, 0.5, 0.4, 0.3, 0.2, 0.1, 0.01, or about 0.001 wt% or less, or about 0 wt% of the composition.

### Relative Viscosity (RV) of Resin

The polyamide in the flame-retardant polyamide composition can have a particular relative viscosity range. Relative viscosity is the ratio of the viscosity of the solution to the viscosity of the solvent used. For polyamides, RV is measured as an 8.4 wt% solution in 90% formic acid, at room temperature and pressure, unless otherwise indicated. The polyamide can have any suitable RV (as measured in 8.4 wt% solution in 90% formic acid), such as ≥20 to <33, ≥20 to <30, ≥20 to ≤25, or 20 to 33, 21 to 33, 22 to 33, 23 to 33, 24 to 33, 25 to 33, 26 to 33, ≥20 to <33, ≥20 to ≤32, ≥21 to <33, ≥22 to <33, ≥23 to <33, or about 20 or less, or less than, equal to, or greater than 20.5, 21, 21.5, 22, 22.5, 23, 23.5, 24, 24.5, 25, 25.5, 26, 26.5, 27, 27.5, 28, 28.5, 29, 29.5, 30, 31, 32, or about 33 or more. For the flame-retardant polyamide composition herein, the RV refers to the RV of the polyamide when tested alone and without any of the other components of the composition such as the one or more flame-retardant additives and without any processing additives or fillers such as glass fibers. Other methods of determining the RV, such as a 1 wt% solution in concentrated sulfuric acid, may be used and an appropriate correlation of RVs between the method used and the 8.4 wt% in 90% formic acid method, as used herein, can be determined.

An alternative method of determining the RV is to measure the Viscosity Number (VN, sometime referred to as Viscosity Index) of the polyamide according to ISO 307 and use the conversion relationships for N66 within the ISO standard to convert the VN to RV. In the case of N66, by way of non-limiting example, a VN (as determined as a 0.5 wt% solution in 96% sulfuric acid) of 83.93 corresponds to an RV of 25 (as measured as a 8.4 wt% solution in 90% formic acid). The ISO 307:2007 at page 29 gives an equation for the interconversion as VN = -206.52124 + 90.23355 * ln(RV), which means RV = exp((VN+206.52124)/90.23355). Using this equation, for N66, an RV of 22 would correspond to a VN of about 72.4 ml/g, and an RV of 36 would correspond to a VN of 116.8 ml/g, with RV measured as a 8.4 wt% solution in 90% formic acid and with VN measured as a 0.5 wt% solution in 96% sulfuric acid. Strictly this relationship is for N66, but for the purposes herein may be applied approximately to other polyamides, it being useful to do so when the polyamide has poor solubility characteristics in 90% formic acid but may be dissolved as a 0.5 wt% solution in 96% sulfuric acid for solution viscosity determinations. Similarly, as reported in ISO 307:2007 at page 30, VN as determined as a 0.5 wt% solution in 96% sulfuric acid can be converted to RV as measured as a 1% solution in 98% sulfuric acid as VN = 69771*RV - 49372, which means RV = (VN+49372)/69771. Similarly, as reported in ISO 307:2007 at pages 31-32, VN as determined as a 0.5 wt% solution in 96% sulfuric acid can be converted to RV as measured as a 1% solution in 95.7% sulfuric acid as VN = 77450.2*RV - 59194.7 or VN = 77573.9*RV - 59897.0, which means RV = (VN+59194.7)/77450.2 or RV = (VN+59897.0)/77573.9. As reported in ISO 307:2007 at page 27, for PA66, ln y = 0.4541 + 0.9261*ln x, wherein y is the viscosity number in 96% sulfuric acid, and x is the viscosity number in 90% formic acid. If additives are present that interfere with viscosity measurement in a particular solvent, viscosity measurements cannot accurately be converted from one solvent to another.

### Flame-retardant additives.

The flame-retardant polyamide composition can include one flame-retardant additive, or more than one flame-retardant additive, wherein the type and amount of the flame-retardant additive are sufficient to impart a desired amount of flame-retardant effect to the polyamide composition as described herein.

The one or more flame-retardant additives can be any suitable proportion of the composition. For example, the one or more flame-retardant additives can be about 1 wt% to about 50 wt% of the composition, about 3 wt% to about 40 wt%, about 1 wt% or less, or less than, equal to, or greater than about 2 wt%, 3, 4, 5, 6, 8, 10, 12, 14, 16, 18, 20, 25, 30, 35, 40, 42, 44, 46, 48, or about 50 wt% or more of the composition. In some aspects, in a composition that is substantially free of reinforcing fillers or free of glass fibers a lower amount of flame retardant can be used, such as about 3 wt% to about 40 wt%, about 4 wt% to 12 wt%, or about 3 wt% or less, or less than, equal to, or greater than about 4 wt%, 5, 6, 7, 8, 9, 10, 11, 12, 14, 16, 18, 20, 22, 24, 26, 28, 30, 32, 34, 36, 38, or about 40 wt% or more. In some aspects, in a composition that includes reinforcing fillers such as glass fibers a greater amount of flame retardant can be used, such as about 10 wt% to 50 wt% of the composition, or 17 wt% to 39 wt%, or about 10 wt% or less, or less than, equal to, or greater than about 12 wt%, 14, 16, 18, 20, 22, 24, 26, 28, 30, 32, 34, 36, 38, 40, 42, 44, 46, 48, or about 50 wt% or more.

The one or more flame-retardant additives are halogen-containing flame-retardant additives, halogen-containing flame-retardant additives with synergists, phosphorus-containing flame-retardant additives, inorganic flame-retardant additives, nitrogen-containing flame-retardant additives, nitrogen-containing flame-retardant additives with synergists, or a combination thereof, wherein the nitrogen-containing flame-retardant additives are selected from melamine cyanurate, melamine polyphosphate, melamine pyrophosphate, or mixtures thereof. A particular flame-retardant additive can be added neat, or can be available as or formed into a blend with a polyamide (e.g., a masterbatch) prior to combining with the polyamide in the flame-retardant composition. In some aspects, the one or more flame retardants can be chosen from Melapur^{™} MC25, Mastertek^{®} 374115, Exolit^{®} OP 1314, Exolit^{®} OP 945, vPreniphor^{™} EPFR-MPP300, SAYTEX^{®} HP 7010, Campine PA 261717, Firebrake^{®} 500, or a combination thereof. The one or more flame retardants can be chosen from melamine cyanurate, aluminum diethylphosphinate, melamine polyphosphate, bromopolystyrene, antimony trioxide, dehydrated zinc borate, and a combination thereof.

Broad classes of flame-retardant additives can include, for example: halogen-containing flame-retardant additives, halogen-containing flame-retardant additives with synergists, phosphorus-containing flame-retardant additives, inorganic flame-retardant additives, nitrogen-containing flame-retardant additives, nitrogen-containing flame-retardant additives with synergists; these may be used alone or in combination. Plastics Additive Handbook, 5th Ed., Ed Hans Zweifel, Hanser, 2000, ISBN 1-56990-295-X, Chapter 12 speaks to the general topic of flame-retardant additives in polyamides and in Table 12.1 p 688 exemplifies typical flame-retardant additives and the levels of various flame-retardant additives used in polyamides. Plastic Additives, 4th Ed., ed R Gächter and H Müller, Hanser, 1993, ISBN 3-446-17571-7, Chapter 12 speaks to the general topic and in Table 7 p. 739 exemplifies flame-retardant additives and the levels of flame-retardant additives used in polyamides. Flame-retardant additives for Plastics and Textiles Practical Applications, Ed Edward D. Weil, Sergei V. Levchik. 2nd Edition, Hanser 2016, ISBN: 978-1-56990-578-4, Chapter 5, p. 117 speaks to the topic of flame-retardant additives and exemplifies flame-retardant additives and the levels of flame-retardant additives used in polyamides throughout. Manufacturers and providers of flame-retardant additives will often supply guidance on effective formulations, for instance, ICL Industrial Products Ltd produces such a guidance sheet for polyamides: Flame-retardant additives for Polyamides (General Application Data on Flame-Retardant Additives for Polyamides 6 and 6,6), historically available at http://icl-ip.com/wp-content/uploads/2012/02/Polyamide-gnl-130729.pdf.

Halogen-containing flame-retardant additives can include: brominated polystyrene; poly(dibromostyrene); poly(pentabromobenzylacrylate); brominated polyacrylate; brominated epoxy polymer; epoxy polymers derived from tetrabromobisphenol A and epichlorohydrin; ethylene-1,2-bis(pentabromophenyl); Dechlorane plus; chlorinated polyethylene; or mixtures thereof.

Synergists, such as for use with halogen-containing flame-retardant additives, can include antimony (III) oxide, antimony (V) oxide, sodium antimonate; iron (II) oxide, iron (II/III) oxide, iron (III) oxide, zinc borate, zinc phosphate, zinc stannate, or mixtures thereof.

Phosphorus-containing flame-retardant additives can include red phosphorus, ammonium polyphosphate, melamine polyphosphate, melamine pyrophosphate, metal dialkylphosphinates (such as aluminum methylethylphosphinate, and aluminum diethylphosphinate), aluminum hypophosphite, or mixtures thereof.

Inorganic flame-retardant additives can include magnesium hydroxide, alumina monohydrate, alumina trihydrate, aluminum hydroxide, or mixtures thereof.

Nitrogen-containing flame-retardant additives can include melamine cyanurate, melamine polyphosphate, melamine pyrophosphate, or mixtures thereof.

Nitrogen-containing flame-retardant additives with synergists can include nitrogen-containing flame-retardant additives together with a synergist, such as but not limited to, Novolac resins (e.g., phenol-formaldehyde resins with a formaldehyde to phenol molar ratio of less than one).

Small amounts of polytetrafluoroethylene can be incorporated into the composition or into the flame-retardant additives, such as to retard dripping.

The literature of flame-retardant additives also speaks to the different mechanisms by which the flame-retardant additive imparts its flame-retardant properties to the polyamide. The flame-retardant additive can be active in the condensed phase, the gas phase, or both. In the condensed phase the flame-retardant additive may act as a heat sink or may participate in the formation of char (e.g., an intumescent system) limiting heat and mass transportation, or provide conduction of heat away by evaporation or mass dilution. In the gas phase, flame-retardant additives may act by interrupting the combustion chemistry by providing volatile species that form radicals in the gas phase which quench the radical chain reactions that would otherwise initiate or propagate the fire. In various aspects, the flame-retardant polyamide composition may aid or enhance the effectiveness of these flame-retarding mechanisms.

### Measuring flame-retardancv.

There are a variety of tests and standards that may be used to rate the flame-retardant nature of a polymeric resin system, such as Underwriters' Laboratories Test No. UL 94, or another rating system. "UL 94 Standard for Tests for Flammability of Plastic Materials for Parts in Devices and Appliances" gives details of the UL 94 testing method and criteria for rating. The test method ASTM D635 is the Standard Test Method for Rate of Burning and/or Extent and Time of Burning of Plastics in a Horizontal Position. The test method ASTM D3801 is the Standard Test Method for Measuring the Comparative Burning Characteristics of Solid Plastics in a Vertical Position. These test methods can be used to generate vertical and horizontal burning UL 94 test ratings. Vertical burning test ratings (e.g.: V-0, V-1, V-2) are more stringent and difficult to achieve than horizontal burning ratings (HB-1, HB-2, HB-3). As seen in Table 1, the V-0 rating is distinguished from the V-1 and V-2 ratings, which are less acceptable if one is seeking the best flame retardance rating. For certain uses, V-1 is acceptable. A specimen must meet all the criteria conditions for a particular rating to achieve that rating. A specimen that fails to reach all the criteria conditions within any of V-2, V-1, or V-0 ratings is rated V-NOT.

**Table 1. Vertical burning test ratings.**

| Criteria Conditions | V-0 | V-1 | V-2 |
|---|---|---|---|
| After-flame time for each individual specimen t₁ or t₂ | ≦10 s | ≦30 s | ≦30 s |
| Total after-flame time for any condition set (t₁ plus t₂ for the 5 specimens) | ≦50 s | ≦250 s | ≦250 s |
| After-flame plus afterglow time for each individual specimen after the second flame application (t₂ + t₃) | ≦30 s | ≦60 s | ≦60 s |
| After-flame or afterglow of any specimen up to the holding clamp | No | No | No |
| Cotton indicator ignited by flaming particles or drops | No | No | Yes |

The UL 94 Flammability test performance rating may be assessed at various thicknesses, for instance and without limitation, 3.18 mm, 3.0 mm, 1.5 mm, 0.71 mm, 0.4 mm. By achieving a UL 94 V-0 rating at a particular thickness, such as 3.18 mm, it is known that a plastic article having any larger thickness will also achieve a UL 94 V-0 rating. Obtaining a V-0 rating is more difficult to achieve in thinner test specimens, such as for 0.4 mm or 0.71 mm thicknesses, than thicker ones, such as 3.18 mm or 3.0 mm thickness.

Other tests and instruments exist to rate flammability, such as: the Limiting Oxygen Index (LOI) test (ASTM 2863); the cone calorimetry instrument (which measures amount and rate of heat release during combustion, ASTM E 1354 and ISO 5660-1 standards are both based upon this instrument); Glow Wire Flammability (IEC 60695-2-12); or Glow Wire Ignition (IEC 60695-2-13).

Other tests which exist to rate flame retardancy include, and are not limited to, those where a determination is made of the rate of smoke generation, smoke obscuration, or the toxicity of smoke and combustion gases.

Other tests exist to rate flame retardancy which are application-specific, such as apparel fabrics, upholstery fabrics, airbag fabrics, carpets, or rugs.

### Reinforcing fillers.

The flame-retardant polyamide composition can include one or more reinforcing fillers. The reinforcing fillers can be any suitable one or more fillers that provide a desired mechanical property. For example, the one or more reinforcing fillers can be carbon (e.g., carbon fibers), glass (e.g., glass fibers), fibrous materials, Kevlar, cellulose, graphene, silicates, nanotubes, diamonds, or a combination thereof. The reinforcing filler can be glass fibers.

Standard industrial glass filler fibers are useful in accordance with the disclosed composition and process. For information on incorporating glass fibers into nylon 66, see Javangula, S., Ghorashi, B. & Draucker, C.C., Journal of Materials Science (1999) 34: 5143. The one or more glass fibers can be about 0.1 wt% to about 62 wt% of the flame-retardant polyamide composition, or about 1 wt% to about 40 wt%, or about 5 wt% to about 40 wt%, ≥10 wt% to ≤60 wt%, ≥15 wt% to <50 wt%, ≥20 wt% to ≤40 wt%, ≥30 wt% to ≤50, or about 0.1 wt% or less, or less than, equal to, or greater than about 1, 2, 3, 4, 5, 6, 8, 10, 12, 14, 16, 18, 20, 22, 24, 26, 28, 30, 32, 34, 36, 38, 40, 42, 44, 46, 48, 50, 52, 54, 56, 58, 60 wt%, or about 62 wt% or more, for example 33 wt% glass fibers, based on the weight of the finished polyamide composition including all additives and fillers (including the glass fibers).

The composition can include one type of glass fibers or multiple types of glass fibers. The glass fibers may have cross-sectional shapes other than round, for example, oval, rectangular, multilobal, or H- or I-shaped. The one or more glass fibers can form any suitable proportion of the composition, such as ≥18 wt% to ≤60 wt%, ≥15 wt% to ≤50 wt%, ≥20 wt% to ≤40 wt%, ≥30 wt% to ≤50 wt%, or about 33 wt%. The glass fibers can be any suitable glass fibers, such as glass fibers including soda-lime glass, fused silica glass, borosilicate glass, lead-oxide glass, aluminosilicate glass, oxide glass, glass with high zirconia content, or a combination thereof. Glass fibers can have any suitable dimensions. The glass fibers can have a length of about 0.1 mm to about 500 mm, about 0.1 mm to about 100 mm, about 0.5 mm to about 50 mm, about 1 mm to about 5 mm, or about 0.1 mm or less, or less than, equal to, or greater than about 0.2 mm, 0.4, 0.6, 0.8, 1, 2, 3, 4, 5, 6, 8, 10, 12, 14, 16, 18, 20, 25, 30, 35, 40, 45, 50, 60, 70, 80, 90, 100, 125, 150, 175, 200, 225, 250, or about 500 mm or more. Glass fibers can have a diameter (e.g., largest cross-sectional dimension) of about 0.1 microns to about 10 mm in diameter, about 0.001 mm to about 1 mm in diameter, or about 0.1 microns or less, or less than, equal to, or greater than about 1 micron, 2, 3, 4, 5, 6, 7, 8, 9, 10, 11, 12, 13, 14, 15, 16, 17, 18, 19, 20, 22, 24, 26, 28, 30, 35, 40, 45, 50, 60, 70, 80, 90 microns, 0.1 mm, 0.2, 0.4, 0.6, 0.8, 1, 2, 3, 4, 5, 6, 7, 8, 9 mm, or about 10 mm or more.

### Other additives.

The flame-retardant polyamide composition of the present disclosure can include any one or more suitable additives. For example, the other additives can include fillers such as talc, mica, clay, silica, alumina, carbon black, natural fiber, wood flour, wood fibers, non-wood plant fibers, sawdust, wood shavings, newsprint, paper, flax, hemp, wheat straw, rice hulls, kenaf, jute, sisal, peanut shells, soy hulls, or combinations thereof. The composition can include one or more catalysts, acid generators, solvents, compatibilizers, crosslinkers, anti-blocking agents, coupling agents, fillers, heat stabilizers, light stabilizers, antioxidants, impact modifiers, tackifiers, flame retardants, plasticizers, blowing agents, colorants, dyes, fragrances, foaming additives, processing aids, lubricants, adhesion promoters, biocides, antimicrobial additives, or combinations thereof. Non-limiting examples of optional additives include anti-fogging agents, anti-static agents, anti-oxidants, bonding, blowing and foaming agents, dispersants, extenders, smoke suppressants, impact modifiers, initiators, nucleants, pigments, colorants and dyes, optical brighteners, plasticizers, processing aids, release agents, silanes, titanates and zirconates, slip agents, anti-blocking agents, stabilizers, stearates, ultraviolet light absorbers, waxes, catalyst deactivators, or combinations thereof.

The flame-retardant polyamide composition can include one or more processability additives, such as to improve the processability of the polyamide (e.g., to decrease the viscosity of the polyamide composition during processing). The one or more processability additives can form any suitable proportion of the composition, such as about 0.01 wt% to about 10 wt% of the composition, about 0.1 wt% to about 1 wt%, or about 0.01 wt% or less, or less than, equal to, or greater than about 0.1 wt%, 0.2, 0.3, 0.4, 0.5, 0.6, 0.8, 1, 1.5, 2, 3, 4, 5, 6, 7, 8, 9, or about 10 wt% or more. One example of a suitable processability additive is Irganox^{®} B1171, a commercial polymer additive product of BASF, which is a blend of hindered phenolic antioxidant (CAS No 23128-74-7) and a phosphite (CAS No 31570-04-4), for processing and long-term thermal stabilization.

The flame-retardant polyamide composition of the present disclosure can include conventional plastics-additives in an amount that is sufficient to obtain a desired processing or performance property for the polyamide composition. The amount should not be wasteful of the additive nor detrimental to the processing or performance of the polyamide composition. Those skilled in the art of thermoplastics compounding, without undue experimentation but with reference to such treatises as Plastics Additives Database (2004) from Plastics Design Library (see, elsevier.com website), can select from many different types of additives for inclusion into the polyamide compositions of the present disclosure.

Even with the variety of functional additives commercially available, it is not a predictable pathway for a person having ordinary skill in the art to find a particular combination of ingredients which, together, can achieve a V-0 rating in a UL 94 Flammability test.

Without undue experimentation but with such references as "Extrusion, The Definitive Processing Guide and Handbook"; "Handbook of Molded Part Shrinkage and Warpage"; "Specialized Molding Techniques"; "Rotational Molding Technology"; and "Handbook of Mold, Tool and Die Repair Welding", all published by Plastics Design Library (see, elsevier.com website), one can make articles of any conceivable shape and appearance using polyamide compositions of the present disclosure.

### Method of making a flame-retardant polyamide composition.

Various aspects of the present invention provide a method of making an embodiment of the flame-retardant polyamide composition described herein. The method can be any suitable method that provides the flame-retardant polyamide composition. For example, the method can include combining the polyamide that is about 30 wt% to about 99 wt% of the composition, the polyamide having a relative viscosity (RV) of ≥20 to <33, with the one or more flame-retardant additives, to form the flame-retardant polyamide composition.

In various aspects, the polyamide resin, such as nylon 66, may be melt-kneaded with the pre-determined amount of glass fibers and other additives using industrial compounding or extrusion equipment. For example, the polyamide resin may be supplied to the feed port of the compounding machine and glass fibers may be introduced either at the feed port, at the side feeder port, or some combination of the two. Compounding conditions may be properly set in terms of the desired temperature range, extrusion pressure, extrusion time, screw speed, etc. to obtain homogenized melt at the discharge port. The compounded glass fiber-reinforced polymer strands immediately after compounding may follow pelletization in the suitable pelletizer with water cooling. The obtained pellets may be useful for further industrial processes, such as injection molding, for making parts and other articles of interest.

In various aspects, the method includes compounding the polyamide with the flame-retardant additive or another additive. In some examples, the method can include using a twin-screw extruder, such as a Coperion ZSK 18 MEGAlab including two conveying screws, having 18-mm diameter with a 56L/D (i.e., LID ratio of 56), co-rotating and turning at a suitable speed, such as 300 RPM. The barrel can be heated along its length in zones at temperatures, typically 270-320°C may be used for Nylon 66 to melt the polymer. The processing section of the Coperion twin screw compounder ZSK 18 MEGAlab can be set up to suit various process needs and to allow a wide variety of processes, such as compounding processes. Polymer, fillers and additives, as desired, can be continuously fed into the first barrel section of the twin screw using a metering feeder. The materials can be conveyed along the screw and get melted and mixed by kneading elements in the plastification section of the barrel. The polyamide composition can then travel along to a side port where, if desired, fillers, such as but not limited to glass fibers, may be added. The polyamide composition can then pass onto degassing zones, and from there to a pressure build zone where it can then exit the die via a hole (e.g., 3-mm diameter) as a lace. The cast lace can feed into a water bath to cool and to enable it to be cut into chips via a pelletizer.

The method can include forming molded shapes. The method can include using an injection molding machine (e.g., Demag Sumitomo Sytec 100/200) which can include a feed throat, such as a single rotating screw in a temperature zoned barrel, where zones may typically range from 40 to 320°C to melt a Nylon 66-based resin, and where the screw may move within the barrel to inject a volume of molten resin into a mold, where the mold is typically at 60-90°C for a Nylon 66 based resin. The mold can yield solid parts or specimens, which can include those suitable for testing, such as flammability bars of desired dimensions.

### EXAMPLES

Various aspects of the present disclosure can be better understood by reference to the following Examples which are offered by way of illustration. The present disclosure is not limited to the Examples given herein.

The term "RV", used herein in the Examples, refers to relative viscosity of a polymer sample as measured (unless otherwise indicated) in an 8.4 wt.% solution in 90% formic acid.

### Materials used in Examples

As used herein, the glass fibers were standard short glass fibers, for example, commercially available product, chopped strand for PA, from Chongqing Polycomp International Corp. (www.cppicfiber.com), which was E-glass chopped strand grade 301HP having 3-mm chopped length and 10-µm filament diameter. In the present disclosure, the term "glass fiber" is abbreviated as "GF" which is understood to be a standard nomenclature in the polymer and compounding industry. The amount of GF in the polymer sample is represented as wt.% of the total, unless stated otherwise. Parts of a composition are given in parts by weight, unless otherwise indicated.

As used herein, Melapur^{™} MC25 is a commercially available halogen-free flame-retardant additive from BASF. The active flame-retardant additive, melamine cyanurate (CAS No. 37640-57-6), has 95% of particles less than 25 µm.

As used herein, Irganox^{®} B1171, a commercial polymer additive product of BASF, is a blend of hindered phenolic antioxidant (CAS No 23128-74-7) and a phosphite (CAS No 31570-04-4) for processing and long-term thermal stabilization.

As used herein, Mastertek^{®} 374115 is a 50 wt% masterbatch of melamine cyanurate (CAS No. 37640-57-6) in Nylon 6 (or N6) available from Campine NV.

As used herein, Exolit^{®} OP 1314 is a commercially available non-halogenated flame-retardant additive based on organic phosphinates (aluminum diethylphosphinate; CAS No 225789-38-8) and a synergist (zinc borate; CAS No 12767-90-7) from Clariant. As used herein, Exolit^{®} OP 945 is a commercially available flame-retardant additive that is aluminum diethylphosphinate (CAS No 225789-38-8) and is produced by Clariant.

As used herein, Preniphor^{™} EPFR-MPP300 is a commercially available, halogen-free, melamine polyphosphate (CAS No 218768-84-4) flame-retardant additive from Presafer (Quingyuan) Phosphor Chemical Co. Ltd.

As used herein, SAYTEX^{®} HP 7010 (CAS No 88497-56-7) is a commercially available class of bromine-based flame-retardant additives from Albemarle.

As used herein, Campine PA 261717 is a 50 wt% masterbatch of antimony trioxide (CAS No 1309-64-4) in Nylon 6 (N6). It is a commercially available product from Campine NV.

As used herein, Firebrake^{®} 500 is a commercially available, dehydrated zinc borate (CAS No 12767-90-7)-based flame-retardant from Borax Europe Ltd.

### Compounding, Molding and Testing of Resins

Compounds were made on a Berstorff ZE 25 AX 40D-UTX twin screw extruder with 25mm screws. Typical setpoint conditions were: Feed zone 1 30°C; Zone 2 160°C; Zone 3 260°C; Zone 4 280°C; Zone 5 290°C; Zone 6 280°C; Zone 7 270°C; Zone 8 270°C; Die 270°C; Vacuum 200 mbar; throughput 10 Kg/hr. Further conditions are given in tables of experimental results.

Injection molding of tensile and impact bars were conducted on an Arburg 420A-1000-170, screw size 25 mm. Further conditions are given in tables of experimental results.

Injection molding of flammability bars were conducted on an Arburg 370C-800-250, screw size 25 mm. Further conditions are given in tables of experimental results. Tensile Properties were determined as per DIN EN ISO 527/1996. Impact Properties were determined as per ISO 180:2013. Flammability Properties were determined as per UL 94 V.

### Examples 1 to 3. Unfilled polyamide formulations containing melamine cyanurate.

Using the general procedures described herein, the following flame-retardant polyamide compositions were made from 48, 35, and 25 RV N66 feedstock polyamides. For each of these specimens, the compositions contained 93.7 parts feedstock polyamide, 6.0 parts Melapur^{™} MC25 flame-retardant additive, and 0.3 parts Irganox^{®} B1171 polymer additive.

Each specimen was molded into the appropriate flammability or mechanical tests bars and the flammability rating and mechanical properties determined.

**Table 2. Formulation and Compounding conditions and behavior for Examples 1 to 3.**

| | Base polymer | Additive Package | Compounding | | |
|---|---|---|---|---|---|
| | | | Screw Speed (rpm) | Torque (% of maximum) | Nozzle pressure (bar) |
| Example 1 (Comparative) | 48 RV | 93.7 part PA | 150 | 32-33 | 9.4 |
| | | 6.0 parts Melapur MC25 | | | |
| | | 0.3 parts Irganox B1171 | | | |
| Example 2 (Comparative) | 35 RV | 93.7 part PA | 150 | 27-28 | 6.1 |
| | | 6.0 parts Melapur MC25 | | | |
| | | 0.3 parts Irganox B1171 | | | |
| Example 3 | 25 RV | 93.7 part PA | 150 | 18-20 | 3.7 |
| | | 6.0 parts Melapur MC25 | | | |
| | | 0.3 parts Irganox B1171 | | | |

Comparing Examples 1 and 2 with Example 3 demonstrates the advantages of improved ease of processing using the 25 RV feedstock polymer as evidenced by the reduced % maximum torque and reduced Nozzle Pressure at the same screw speed of 150 RPM.

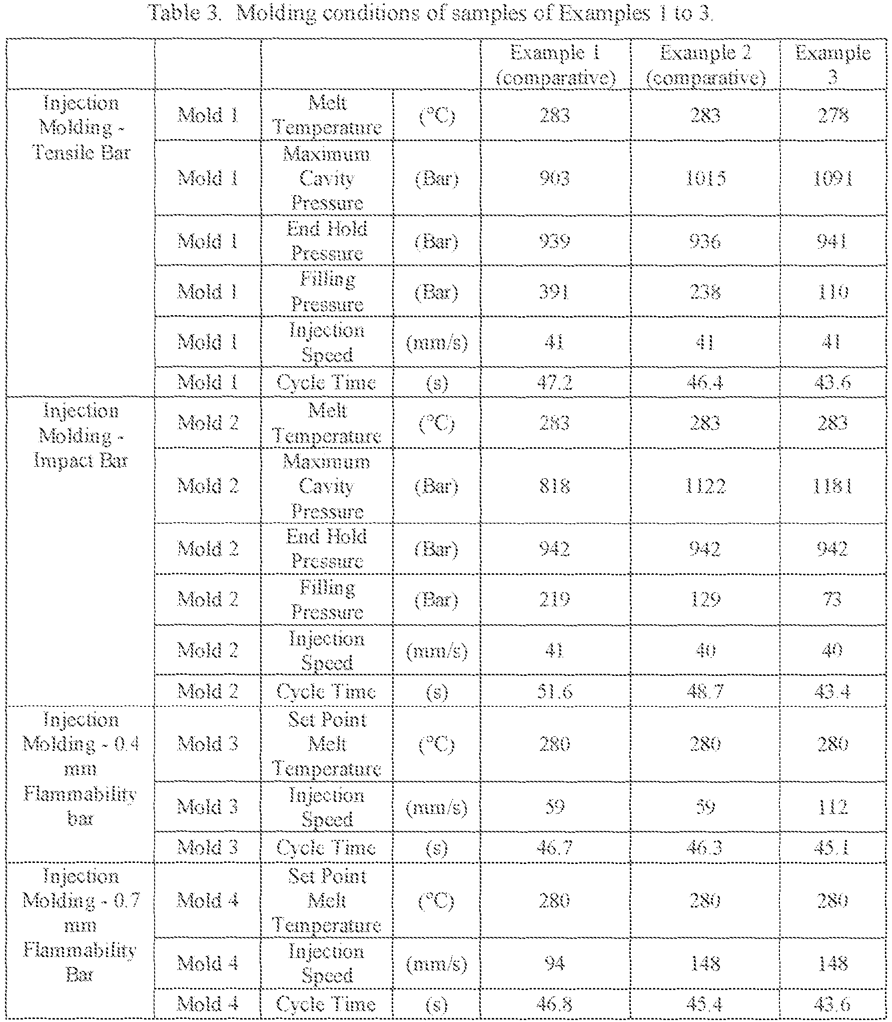

Comparing Examples 1 and 2 with Example 3 demonstrates the advantages of improved ease of processing using the 25 RV feedstock polymer as evidenced by the reduced filling pressures, and reduced cycle times.

**Table 4. Flammability ratings for Examples 1 to 3.**

| | UL 94V | UL 94V | UL 94V | UL 94V | UL 94V | UL 94V |
|---|---|---|---|---|---|---|
| | 0.4 mm | 0.4 mm | 0.4 mm | 0.7 mm | 0.7 mm | 0.7 mm |
| Example 1 (Comparative) | 48hr/23°C V-2 | 168hr/70°C V-2 | Overall V-2 | 48hr/23°C V-2 | 168hr/70°C V-2 | Overall V-2 |
| Example 2 (Comparative) | V-2 | V-0 | V-2 | V-2 | V-2 | V-2 |
| Example 3 | V-2 | V-2 | V-2 | V-2 | V-2 | V-2 |

Comparing Examples 1 and 2 with Example 3 demonstrates the comparable flammability performances.

**Table 5. Mechanical properties for Examples 1 to 3.**

| | Yield Stress | Yield Strain | Tensile Strength | Stress at break | Strain at break | Tensile Modulus | IZOD |
|---|---|---|---|---|---|---|---|
| | N/mm² | % | N/mm² | N/mm² | % | N/mm² | ISO 180/1U |
| Example 1 (Comparative) | 91.4 | 4.2 | 91.4 | 84.4 | 13.9 | 3533 | 76 |
| Example 2 (Comparative) | 91.9 | 4.2 | 91.8 | 90.0 | 6.3 | 3602 | 53 |
| Example 3 | - | - | 84.0 | 84.0 | 2.8 | 3640 | 32 |

Comparing Examples 1 and 2 with Example 3 demonstrates that though some of the mechanical properties are reduced they are still acceptable, and that some properties are improved.

Overall, comparing Examples 1-2 to Example 3 demonstrates the improved ease of processing from using the 25 RV feedstock polymer whilst maintaining flammability properties together with useful mechanical properties. Should flammability properties not meet the desired performance, the improved ease of processing widens the processing window to one skilled in the art to allow them to add further flame-retardant additives to meet the balance of acceptable processing, flammability, and mechanical performance desired.

### Examples 4 to 6. Unfilled polyamide formulations containing melamine cyanurate.

Using the general procedures described herein, the following flame-retardant polyamide compositions were made from 48, 35, and 25 RV N66 feedstock polyamides. For each of these specimens, the compositions contained 95.7 parts feedstock polyamide, 4.0 parts Melapur^{™} MC25 flame-retardant additive, and 0.3 parts Irganox^{®} B1171 polymer additive.

Each specimen was molded into the appropriate flammability or mechanical tests bars and the flammability rating and mechanical properties determined.

**Table 6. Formulation and Compounding conditions and behavior for Examples 4 to 6.**

| | Base polymer | Additive Package | Compounding | | |
|---|---|---|---|---|---|
| | | | Screw Speed (rpm) | Torque (% of maximum) | Nozzle pressure (bar) |
| Example 4 (Comparative) | 48 RV | 95.7 part PA | 150 | 33-34 | 10.0 |
| | | 4.0 parts Melapur MC25 | | | |
| | | 0.3 parts Irganox B1171 | | | |
| Example 5a (Comparative) | 35 RV | 95.7 part PA | 150 | 26-27 | 5.8 |
| | | 4.0 parts Melapur MC25 | | | |
| | | 0.3 parts Irganox B1171 | | | |
| Example 5b (Comparative) | 35 RV | 95.7 part PA | 100 | 28-30 | 7.0 |
| | | 4.0 parts Melapur MC25 | | | |
| | | 0.3 parts Irganox B1171 | | | |
| Example 6 | 25 RV | 95.7 part PA | 150 | 26-28 | 2.7 |
| | | 4.0 parts Melapur MC25 | | | |
| | | 0.3 parts Irganox B1171 | | | |

Comparing Examples 4, 5a and 5b with Example 6 demonstrates the advantages of improved ease of processing using the 25 RV feedstock polymer as evidenced by the reduced % maximum torque and reduced nozzle pressure. Example 5 was run at two screw speeds in Example 5a and Example 5b) and pellet bridging problems were countered at the higher speed.

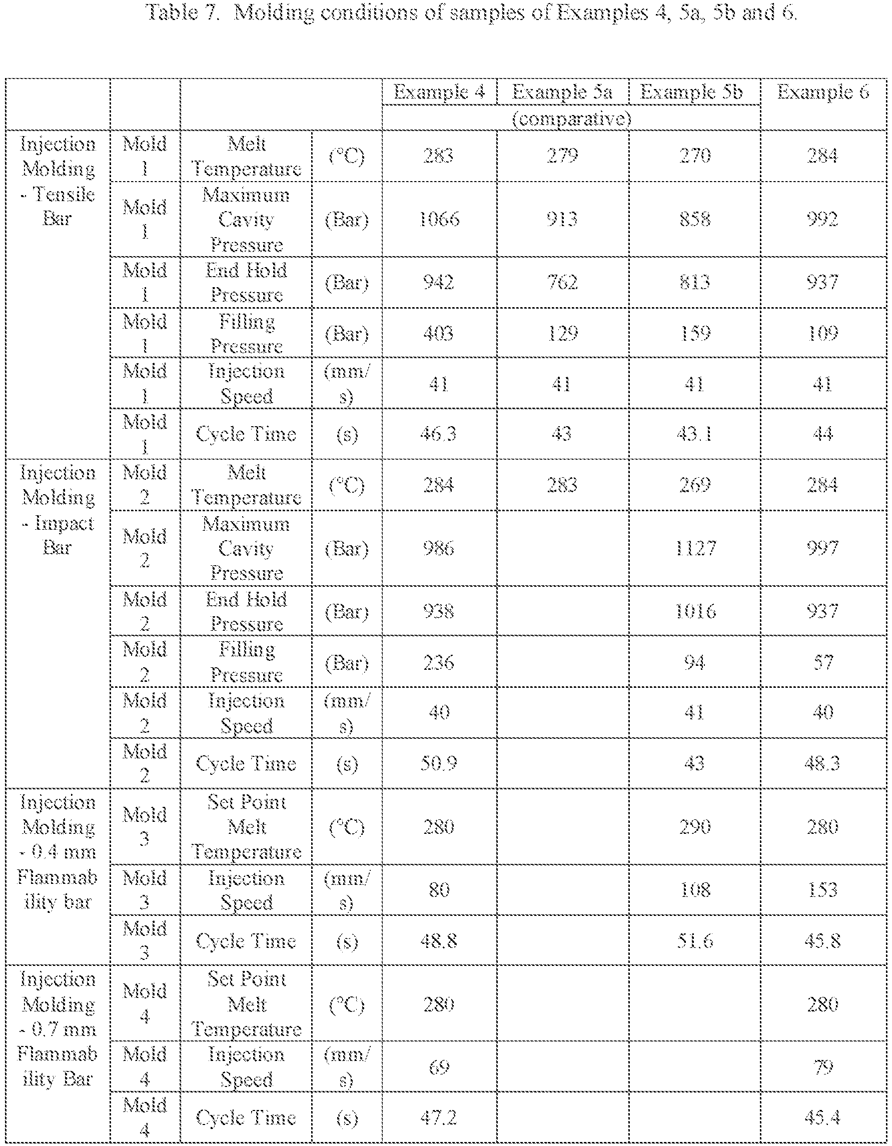

Comparing Examples 4, 5a, and 5b with Example 6 demonstrates the advantages of improved ease of processing using the 25 RV feedstock polymer as evidenced by the reduced filling pressures, and/or the generally reduced cycle times.

**Table 8. Flammability ratings for Examples 4 to 6.**

| | UL 94V | UL 94V | UL 94V | UL 94V | UL 94V | UL 94V |
|---|---|---|---|---|---|---|
| | 0.4 mm | 0.4 mm | 0.4 mm | 0.7 mm | 0.7 mm | 0.7 mm |
| | 48hr/23°C | 168hr/70°C | Overall | 48hr/23°C | 168hr/70°C | Overall |
| Example 4 (Comparative) | V-2 | V-2 | V-2 | V-2 | V-2 | V-2 |
| Example 5a (Comparative) | not determined | not determined | not determined | not determined | not determined | not determined |
| Example 5b (Comparative) | not determined | not determined | not determined | not determined | not determined | not determined |
| Example 6 | V-2 | V-2 | V-2 | V-2 | V-2 | V-2 |

Comparing Examples 4, 5a, and 5b with Example 6 demonstrates the comparable flammability performances.

**Table 9. Mechanical properties for Examples 4 to 6. N.D. = not determined.**

| | Yield Stress | Yield Strain | Tensile Strength | Stress at break | Strain at break | Tensile Modulus | IZOD |
|---|---|---|---|---|---|---|---|
| | N/mm² | % | N/mm² | N/mm² | % | N/mm² | ISO 180/1U |
| Example 4 (Comparative) | 93.1 | 4.2 | 93.1 | 79.4 | 20.7 | 3529 | 128.4 |
| Example 5a (Comparative) | N.D. | N.D. | N.D. | N.D. | N.D. | N.D. | N.D. |
| Example 5b (Comparative) | 87.7 | 8.0 | 86.1 | 86.1 | 6.6 | 3544 | 64.9 |
| Example 6 | - | - | 88.5 | 88.2 | 3.2 | 3612 | 31.9 |

Comparing Examples 4 and 5b with Example 3 demonstrates that though some of the mechanical properties are reduced they are still acceptable, and that some properties are improved.

Overall, comparing Examples 4, 5a, 5b, and 6 demonstrates the improved ease of processing from using the 25 RV feedstock polymer at both compounding and molding whilst maintaining flammability properties together with useful mechanical properties, indeed some properties are improved. Should flammability properties not meet the desired performance, the improved ease of processing widens the processing window to one skilled in the art to allow them to add further flame-retardant additives to meet the balance of acceptable processing, flammability and mechanical performance required.

### Example 7 to 9. Unfilled polyamide formulations containing melamine cyanurate.

Using the general procedures described herein, the following flame-retardant polyamide compositions were made from 48, 35, and 25 RV N66 feedstock polyamides. The test compositions contained 87.7 parts of 25 RV N66 polyamide, 12.0 parts of Mastertek^{®} 374115 flame-retardant additive masterbatch, and 0.3 parts Irganox^{®} B1171 polymer additive.

Each specimen was molded into the appropriate flammability or mechanical tests bars and the flammability rating and mechanical properties were determined.

**Table 10. Formulation and compounding conditions and behavior for Examples 7 to 9.**

| | Base polymer | Additive Package | Compounding | | |
|---|---|---|---|---|---|
| | | | Screw Speed (rpm) | Torque (% of maximum) | Nozzle pressure (bar) |
| Example 7 (Comparative) | 48 RV | 87.7 part PA | 150 | 28-29 | 9.6 |
| | | 12.0 parts Mastertek 374115 | | | |
| | | 0.3 parts Irganox B1171 | | | |
| Example 8 (Comparative) | 35 RV | 87.7 part PA | 150 | 27-29 | 6.0 |
| | | 12.0 parts Mastertek 374115 | | | |
| | | 0.3 parts Irganox B1171 | | | |
| Example 9 | 25 RV | 87.7 part PA | 150 | 24-25 | 3.8 |
| | | 12.0 parts Mastertek 374115 | | | |
| | | 0.3 parts Irganox B1171 | | | |

Comparing Examples 7 and 8 with Example 9 demonstrates the advantages of improved ease of processing using the 25 RV feedstock polymer as evidenced by the reduced % maximum torque and reduced nozzle pressure.

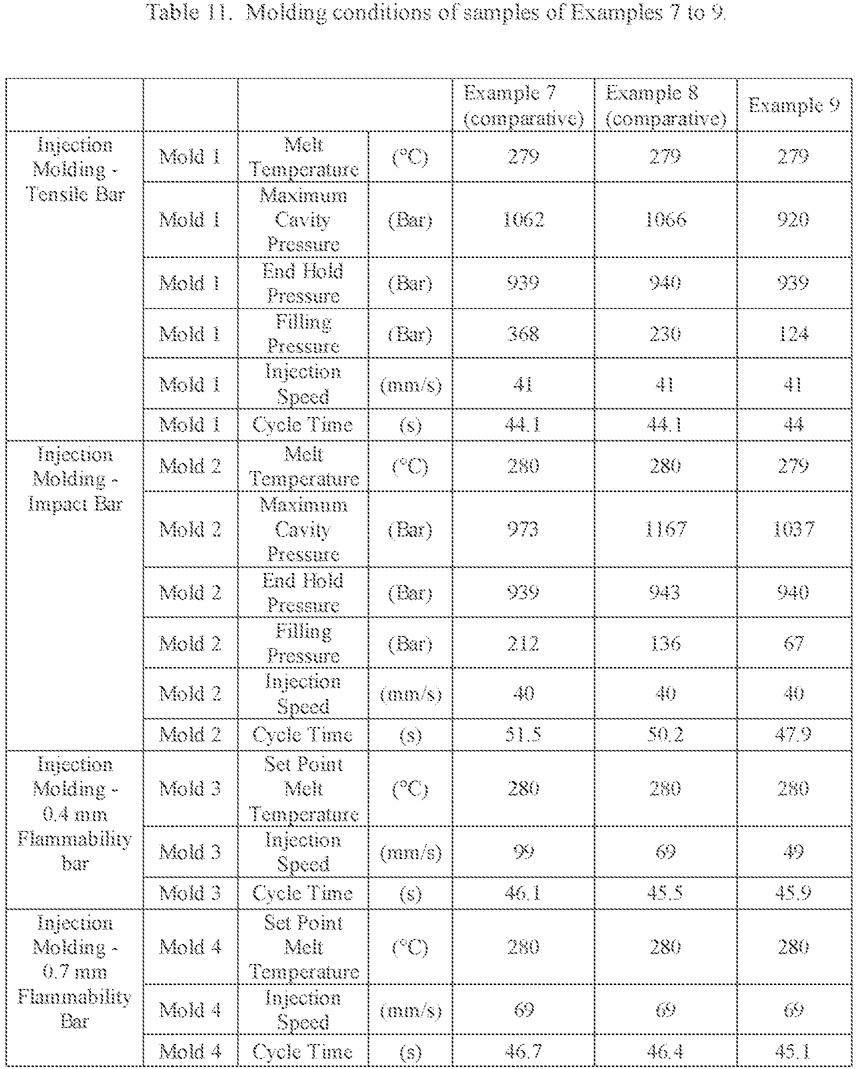

Comparing Examples 7 and 8 with Example 9 demonstrates the advantages of improved ease of processing using the 25 RV feedstock polymer as evidenced by the reduced filling pressures, and/or the generally reduced cycle times.

**Table 12. Flammability ratings for Examples 7 to 9.**

| | UL 94V | UL 94V | UL 94V | UL 94V | UL 94V | UL 94V |
|---|---|---|---|---|---|---|
| | 0.4 mm | 0.4 mm | 0.4 mm | 0.7 mm | 0.7 mm | 0.7 mm |
| | 48hr/23°C | 168hr/70°C | Overall | 48hr/23°C | 168hr/70°C | Overall |
| Example 7 (Comparative) | V-2 | V-2 | V-2 | V-2 | V-2 | V-2 |
| Example 8 (Comparative) | V-2 | V-2 | V-2 | V-2 | V-2 | V-2 |
| Example 9 | V-2 | V-0 | V-2 | V-0 | V-2 | V-2 |

Comparing Examples 7 and 8 with Example 9 demonstrates the comparable flammability performances. Improvement was observed with the 25 RV feedstock resin formulation as evidenced by the V-0 rating as compared to the V-2 ratings of the higher viscosity feedstock resin formulations.

**Table 13. Mechanical properties for Examples 7 to 9.**

| | Yield Stress | Yield Strain | Tensile Strength | Stress at break | Strain at break | Tensile Modulus | |
|---|---|---|---|---|---|---|---|
| | | | | | | | IZOD |
| | N/mm² | % | N/mm² | N/mm² | % | N/mm² | ISO 180/1U |
| Example 7 (Comparative) | 90.8 | 4.1 | 90.8 | 77.6 | 19.9 | 3488 | 100 |
| Example 8 (Comparative) | 91.9 | 4.2 | 91.9 | 89.3 | 6.8 | 3547 | 76 |
| Example 9 | - | - | 83.6 | 83.6 | 3.1 | 3594 | 39 |

Comparing Examples 7 and 8 with Example 9 demonstrates that though some of the mechanical properties are reduced they are still acceptable, and that some properties are improved.

Overall, comparing Examples 7, and 8 to Example 9 demonstrates the improved ease of processing from using the 25 RV feedstock polymer at both compounding and molding whilst maintaining flammability properties together with useful mechanical properties, indeed some properties are improved. Should flammability properties not meet the desired performance, the improved ease of processing widens the processing window to one skilled in the art to allow them to add further flame-retardant additives to meet the balance of acceptable processing, flammability and mechanical performance required.

### Examples 10 to 12. Formulation and compounding conditions and behavior with halogen- and antimony-free, phosphorus-containing flame-retardant.

Using the general procedures described herein, the following flame-retardant polyamide compositions were made from 48, 35, and 25 RV N66 feedstock polyamides. The test compositions contained 62.2 parts of 25 RV N66 polyamide, 15.0 parts of glass fiber, 22.5 parts of Exolit^{®} OP 1314 flame-retardant additive, and 0.3 parts Irganox^{®} B1171 polymer additive.

Each specimen was molded into the appropriate flammability or mechanical tests bars and the flammability rating and mechanical properties determined.

**Table 14 Formulation and Compounding conditions and behavior for Examples 10 to 12.**

| | Base polymer | Additive Package | Compounding | | |
|---|---|---|---|---|---|
| | | | Screw Speed (rpm) | Torque (% of maximum) | Nozzle pressure (bar) |
| Example 10 (Comparative) | 48 RV | 62.2 part PA | 200 | 33-44 | 13.0 |
| | | 15.0 part Glass Fiber | | | |
| | | 22.5 part Exolit OP 1314 | | | |
| | | 0.3 parts Irganox B1171 | | | |
| Example 11 (Comparative) | 35 RV | 62.2 part PA | 200 | 25-38 | 15.0 |
| | | 15.0 part Glass Fiber | | | |
| | | 22.5 part Exolit OP 1314 | | | |
| | | 0.3 parts Irganox B1171 | | | |
| Example 12 | 25 RV | 62.2 part PA | 200 | 22-35 | 5.0 |
| | | 15.0 part Glass Fiber | | | |
| | | 22.5 part Exolit OP 1314 | | | |
| | | 0.3 parts Irganox B1171 | | | |

Comparing Examples 10 and 11 with Example 12 demonstrates the advantages of improved ease of processing using the 25 RV feedstock polymer as evidenced by the reduced % maximum torque and reduced nozzle pressure.

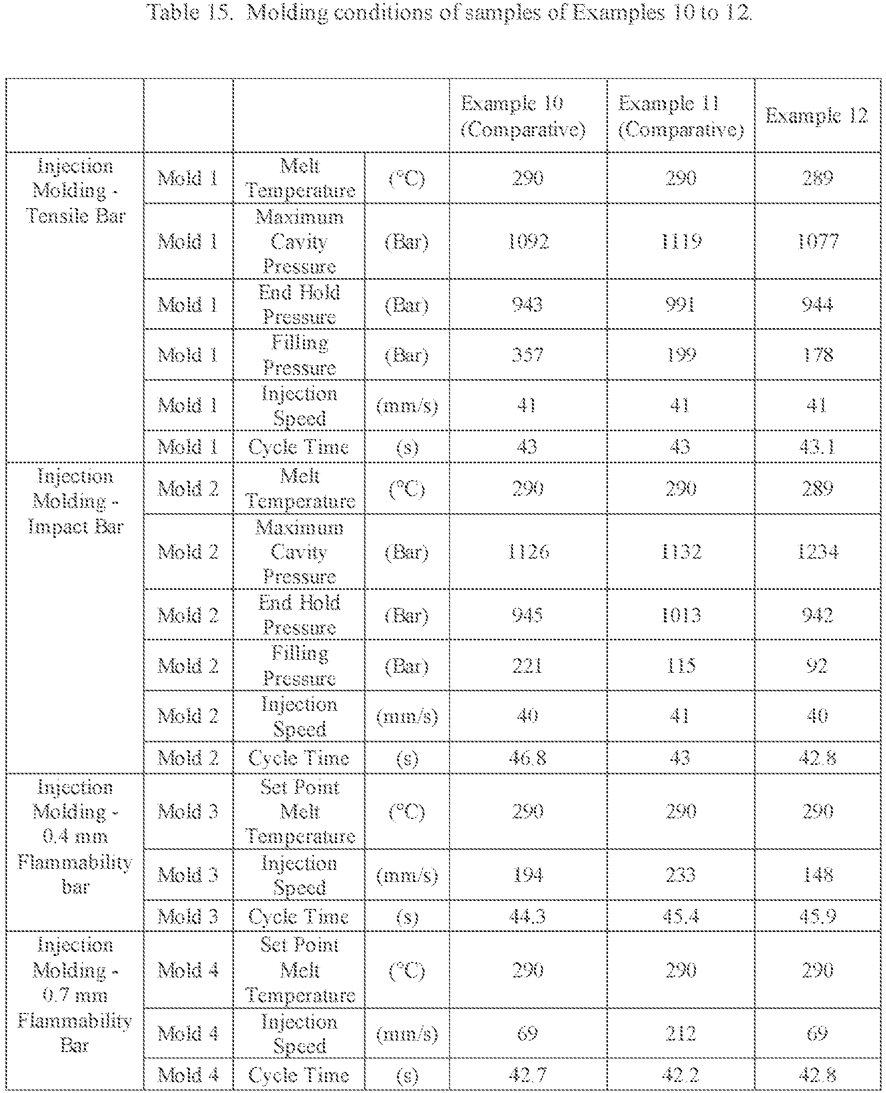

Comparing Examples 10 and 11 with Example 12 demonstrates the advantages of improved ease of processing using the 25 RV feedstock polymer as evidenced by the reduced Filling Pressures, and/or generally reduced cycle times.

**Table 16. Flammability ratings for Examples 10 to 12.**

| | UL 94V | UL 94V | UL 94V | UL 94V | UL 94V | UL 94V |
|---|---|---|---|---|---|---|
| | 0.4 mm 48hr/23°C | 0.4 mm 168hr/70°C | 0.4 mm Overall | 0.7 mm 48hr/23°C | 0.7 mm 168hr/70°C | 0.7 mm Overall |
| Example 10 (Comparative) | V-0 | V-0 | V-0 | V-0 | V-0 | V-0 |
| Example 11 (Comparative) | V-0 | V-0 | V-0 | V-0 | V-0 | V-0 |
| Example 12 | V-0 | V-0 | V-0 | V-0 | V-0 | V-0 |

Comparing Examples 10 and 11 with Example 12 demonstrates the comparable flammability performances.

**Table 17. Mechanical roerties for Examples 10 to 12.**

| | Yield Stress | Yield Strain | Tensile Strength | Stress at break | Strain at break | Tensile Modulus | IZOD |
|---|---|---|---|---|---|---|---|
| | N/mm² | % | N/mm² | N/mm² | % | N/mm² | ISO 180/1U |
| Example 10 (Comparative) | - | - | 114.8 | 114.7 | 3.5 | 6850 | 50.7 |
| Example 11 (Comparative) | - | - | 114.8 | 114.8 | 3.4 | 6929 | 42.8 |
| Example 12 | - | - | 119.1 | 119.0 | 3.3 | 6874 | 42.8 |

Comparing Examples 10 and 11 with Example 12 demonstrates that though some of the mechanical properties are reduced they are still acceptable, and that some properties are improved.

Overall, comparing Examples 10, 11, and 12 demonstrates the improved ease of processing from using the 25 RV feedstock polymer at both compounding and molding whilst maintaining flammability properties together with useful mechanical properties, indeed some properties are improved. Should flammability properties not meet the desired performance, the improved ease of processing widens the processing window to one skilled in the art to allow them to add further flame-retardant additives to meet the balance of acceptable processing, flammability and mechanical performance required.

### Examples 13 to 15. Polyamide formulation with halogen- and antimony-free, phosphorus-containing flame-retardant additive.

Using the general procedures described herein, the following flame-retardant polyamide compositions were made from 48, 35, and 25 RV N66 feedstock polyamides. The test compositions contained 60.1 parts of 25 RV N66 polyamide, 15.0 parts of glass fiber, 12.3 parts of Exolit^{®} OP 1314 flame-retardant additive, 12.3 parts Prenifor^{™} EPFR-MPP300 flame-retardant additive, and 0.3 parts Irganox^{®} B1171 polymer additive.

Each specimen was molded into the appropriate flammability or mechanical tests bars and the flammability rating and mechanical properties determined.

**Table 18. Formulation and compounding conditions and behavior for Examples 13 to 15.**

| | Base polymer | Additive Package | Compounding | | |
|---|---|---|---|---|---|
| | | | Screw Speed (rpm) | Torque (% of maximum) | Nozzle pressure (bar) |
| Example 13 (Comparative) | 48 RV | 60.1 part PA | 200 | 34-47 | 13.0 |
| | | 15.0 part Glass Fiber | | | |
| | | 12.3 part Exolit OP 1314 | | | |
| | | 12.3 parts Prenifor EPFR-MPP300 | | | |
| | | 0.3 parts Irganox B1171 | | | |
| Example 14 (Comparative) | 35 RV | 60.1 part PA | 200 | 30-44 | 21.0 |
| | | 15.0 part Glass Fiber | | | |
| | | 12.3 part Exolit OP 1314 | | | |
| | | 12.3 parts Prenifor EPFR-MPP300 | | | |
| | | 0.3 parts Irganox B1171 | | | |
| Example 15 | 25 RV | 60.1 part PA | 200 | 24-36 | |
| | | 15.0 part Glass Fiber | | | |
| | | 12.3 part Exolit OP 1314 | | | |
| | | 12.3 parts Prenifor EPFR-MPP300 | | | |
| | | 0.3 parts Irganox B1171 | | | |

Comparing Examples 13 and 14 with Example 15 demonstrates the advantages of improved ease of processing using the 25 RV feedstock polymer as evidenced by the reduced % maximum torque and reduced Nozzle Pressure.

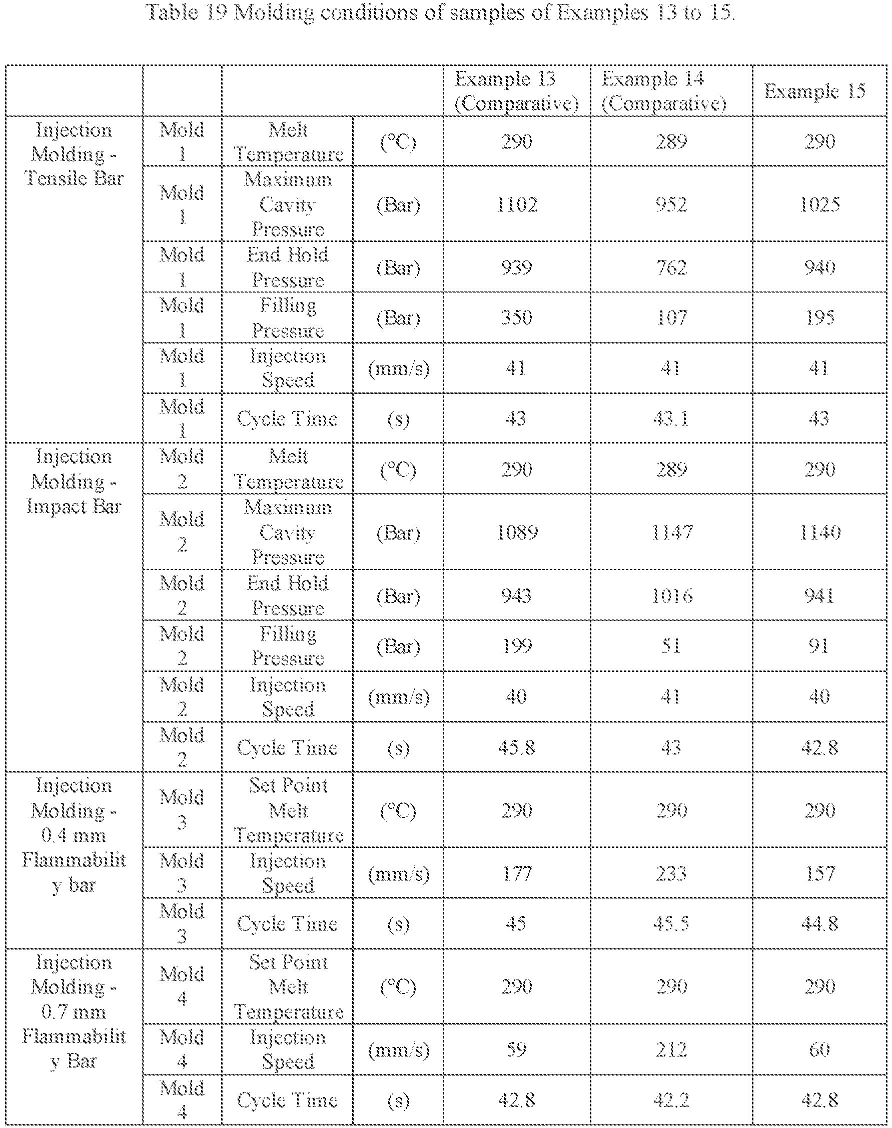

Comparing Examples 13 and 14 with Example 15 demonstrates the advantages of improved ease of processing using the 25 RV feedstock polymer as evidenced by the generally reduced Filling Pressures and/or cycle times.

**Table 20. Flammability ratings for Examples 13 to 15.**

| | UL 94V | UL 94V | UL 94V | UL 94V | UL 94V | UL 94V |
|---|---|---|---|---|---|---|
| | 0.4 mm | 0.4 mm | 0.4 mm | 0.7 mm | 0.7 mm | 0.7 mm |
| | 48hr/23°C | 168hr/70°C | Overall | 48hr/23°C | 168hr/70°C | Overall |
| Example 13 (Comparative) | V-NOT | V-NOT | V-NOT | V-NOT | V-NOT | V-NOT |
| Example 14 (Comparative) | V-NOT | V-NOT | V-NOT | V-NOT | V-0 | V-NOT |
| Example 15 | V-2 | V-NOT | V-NOT | V-2 | V-0 | V-2 |

Comparing Examples 13 and 14 with Example 15 demonstrates the comparable Flammability performances. Indeed, in some instances an improvement in the flammability rating.

**Table 21. Mechanical properties for Examples 13 to 15.**

| | Yield Stress | Yield Strain | Tensile Strength | Stress at break | Strain at break | Tensile Modulus | IZOD |
|---|---|---|---|---|---|---|---|
| | N/mm² | % | N/mm² | N/mm² | % | N/mm² | ISO 180/1U |
| Example 13 (Comparative) | - | - | 125.9 | 125.6 | 2.9 | 7184 | 39.7 |
| Example 14 (Comparative) | - | - | 122.3 | 122.1 | 2.5 | 7394 | 22.2 |
| Example 15 | - | - | 126.8 | 126.3 | 2.8 | 7285 | 30.3 |

Comparing Examples 10 and 11 with Example 12 demonstrates that though some of the mechanical properties are reduced they are still acceptable, and that some properties are improved.

Overall, comparing Examples 13, 14, and 15 demonstrates the improved ease of processing from using the 25 RV feedstock polymer at both compounding and molding whilst maintaining flammability properties together with useful mechanical properties, indeed some properties are improved. Should flammability properties not meet the desired performance, the improved ease of processing widens the processing window to one skilled in the art to allow them to add further flame-retardant additives to meet the balance of acceptable processing, flammability, and mechanical performance required.

### Examples 16 to 19. Polyamide formulation polyamide formulation with halogen- and antimony-containing flame-retardant additive.

Using the general procedures described herein, the following flame-retardant polyamide compositions were made from 48, 35, and 25 RV N66 feedstock polyamides. The test compositions contained 36.4 parts of 22 RV N66 polyamide, 25.0 parts of glass fiber, 25.9 parts of SAYTEX^{®} HP 7010 bromine-based flame-retardant additive, 3.1 parts of Campine PA 261717 antinomy-based flame-retardant additive, 9.3 parts of Firebrake^{®} 500 zinc borate-based fire retardant additive, and 0.3 parts of Irganox^{®} B1171 polymer additive.

Each specimen was molded into the appropriate flammability or mechanical tests bars and the flammability rating and mechanical properties determined.

**Table 22. Formulation and compounding conditions and behavior for Examples 16 to 19.**

| | Base polymer | Additive Package | Compounding | | |
|---|---|---|---|---|---|
| | | | Screw Speed (rpm) | Torque (% of maximum) | Nozzle pressure (bar) |
| Example 16 (Comparative) | 48 RV | 36.4 part PA | 200 | 36-42 | 10.0 |
| | | 25.0 part Glass Fiber | | | |
| | | 25.9 parts SAYTEX HP 7010 | | | |
| | | 3.1 part Campine PA 261717 (Sb₂O₅ m/b) | | | |
| | | 9.3 parts Firebrake 500 (ZnBorate) | | | |
| | | 0.3 parts Irganox B1171 | | | |
| Example 17 (Comparative) | 35 RV | 36.4 part PA | 200 | 30-36 | 7.0 |
| | | 25.0 part Glass Fiber | | | |
| | | 25.9 parts SAYTEX HP 7010 | | | |
| | | 3.1 part Campine PA 261717 (Sb₂O₅ m/b) | | | |
| | | 9.3 parts Firebrake 500 (ZnBorate) | | | |
| | | 0.3 parts Irganox B1171 | | | |
| Example 18 | 25 RV | 36.4 part PA | 200 | 31-35 | 3.0 |
| | | 25.0 part Glass Fiber | | | |
| | | 25.9 parts SAYTEX HP 7010 | | | |
| | | 3.1 part Campine PA 261717 (Sb₂O₅ m/b) | | | |
| | | 9.3 parts Firebrake 500 (ZnBorate) | | | |
| | | 0.3 parts Irganox B1171 | | | |
| Example 19 | 20 RV | 36.4 part PA | 200 | 20-27 | 2.0 |
| | | 25.0 part Glass Fiber | | | |
| | | 25.9 parts SAYTEX HP 7010 | | | |
| | | 3.1 part Campine PA 261717 (Sb₂O₅ m/b) | | | |
| | | 9.3 parts Firebrake 500 (ZnBorate) | | | |
| | | 0.3 parts Irganox B1171 | | | |

Comparing Examples 16 and 17 with Examples 18 and 19 demonstrates the advantages of improved ease of processing using the 25 RV and 20 RV feedstock polymers as evidenced by the reduced % maximum torque and reduced nozzle pressure.

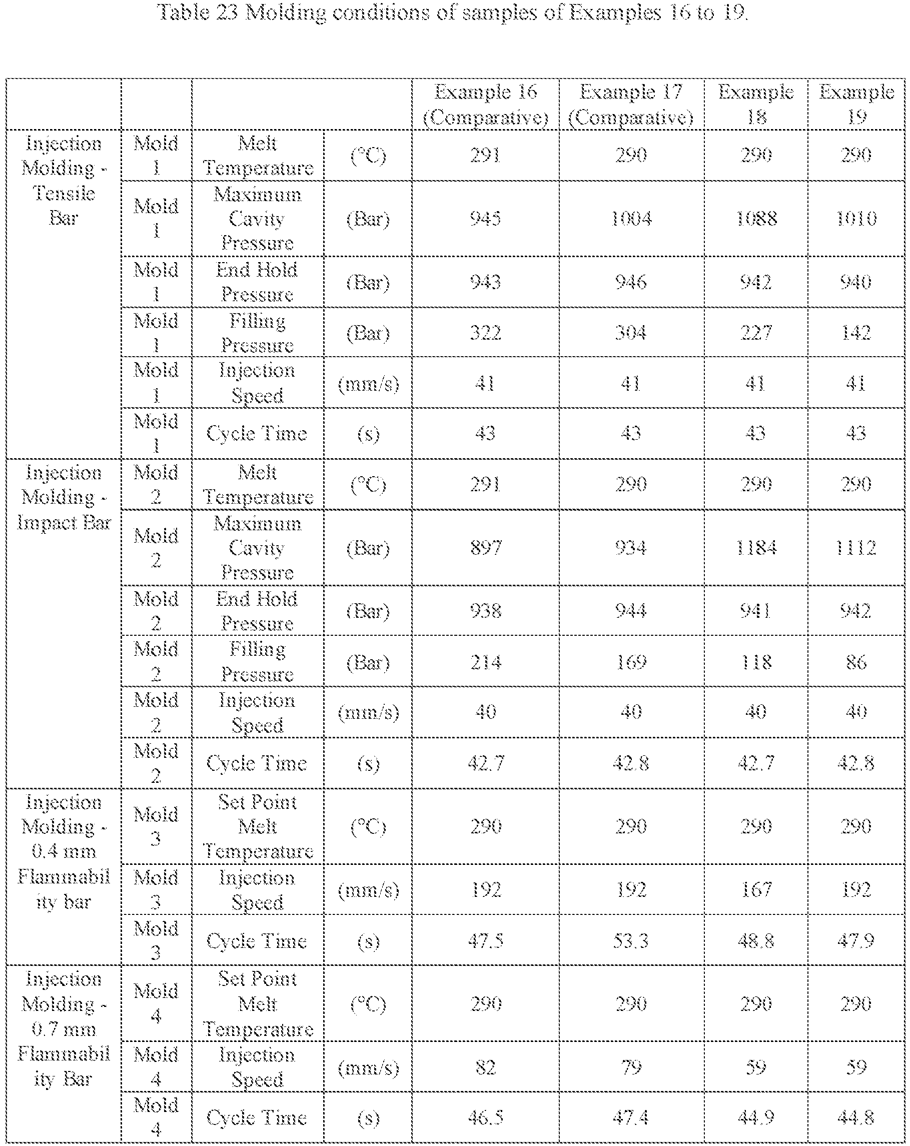

Comparing Examples 16 and 17 with Examples 18 and 19 demonstrates the advantages of improved ease of processing using the 25 RV and 20 RV feedstock polymers as evidenced by the generally reduced filling pressures and/or cycle times.

**Table 24. Flammability ratings for Examples 16 to 19.**

| | UL 94V | UL 94V | UL 94V | UL 94V | UL 94V | UL 94V |
|---|---|---|---|---|---|---|
| | 0.4 mm | 0.4 mm | 0.4 mm | 0.7 mm | 0.7 mm | 0.7 mm |
| | 48hr/23°C | 168hr/70°C | Overall | 48hr/23°C | 168hr/70°C | Overall |
| Example 16 (Comparative) | V-0 | V-0 | V-0 | V-0 | V-0 | V-0 |
| Example 17 (Comparative) | V-0 | V-0 | V-0 | V-0 | V-0 | V-0 |
| Example 18 | V-0 | V-2 | V-2 | V-0 | V-0 | V-0 |
| Example 19 | V-2 | V-0 | V-2 | V-0 | V-0 | V-0 |

Comparing Examples 16 and 17 with Examples 18 and 9 demonstrates the comparable flammability performances.

**Table 25 Mechanical Properties for Examples 16 to 19.**

| | Yield Stress | Yield Strain | Tensile Strength | Stress at break | Strain at break | Tensile Modulus | IZOD |
|---|---|---|---|---|---|---|---|
| | N/mm² | % | N/mm² | N/mm² | % | N/mm² | ISO 180/1U |
| Example 16 (Comparative) | - | - | 145.1 | 144.3 | 2.1 | 11137 | 37.3 |
| Example 17 (Comparative) | - | - | 142.7 | 142.3 | 2.1 | 10625 | 40.4 |
| Example 18 | - | - | 146.2 | 146.0 | 2.2 | 10864 | 44.4 |
| Example 19 | - | - | 142.6 | 142.6 | 2.0 | 10435 | 39.6 |

Comparing Examples 16 and 17 with Examples 18 and 19 demonstrates that though some of the mechanical properties are reduced they are still acceptable, and that some properties are improved.

Overall, comparing Examples 16 and 17 to Examples 18 and 19 demonstrates the improved ease of processing from using the 25 RV or 20 RV feedstock polymers at both compounding and molding whilst maintaining useful mechanical properties and while improving some properties. Should flammability properties not meet the desired performance, the improved ease of processing widens the processing window to one skilled in the art to allow them to add further flame-retardant additives to meet the balance of acceptable processing, flammability, and mechanical performance required.

### Examples 20 to 22. Polyamide formulation with halogen- and antimony-free, phosphorus-containing flame-retardant additive.

Using the general procedures described herein, the following flame-retardant polyamide compositions were made from 48, 35, and 25 RV N66 feedstock polyamides. The test compositions contained 42.7 parts of 25 RV N66 polyamide, 40.0 parts of glass fiber, 12.0 parts of Exolit^{®} OP 1314 flame-retardant additive, 5.0 parts of Prenifor^{™} EPFR-MPP300 flame-retardant additive, and 0.3 parts of Irganox^{®} B1171 polymer additive.

Each specimen was molded into the appropriate flammability or mechanical tests bars and the flammability rating and mechanical properties determined.

**Table 26. Formulation and compounding conditions and behavior for Examples 20 to 22.**

| | Base polymer | Additive package | Compounding | | |
|---|---|---|---|---|---|
| | | | Screw Speed (rpm) | Torque (% of maximum) | Nozzle pressure (bar) |
| Example 20 (Comparative) | 48 RV | 42.7 part PA | 200 | 31-44 | 21.0 |
| | | 40.0 part Glass Fiber | | | |
| | | 12.0 part Exolit OP 1314 | | | |
| | | 5.0 parts Prenifor EPFR-MPP300 | | | |
| | | 0.3 parts Irganox B1171 | | | |
| Example 21 (Comparative) | 35 RV | 42.7 part PA | 200 | 28-38 | 17.0 |
| | | 40.0 part Glass Fiber | | | |
| | | 12.0 part Exolit OP 1314 | | | |
| | | 5.0 parts Prenifor EPFR-MPP300 | | | |
| | | 0.3 parts Irganox B1171 | | | |
| Example 22 | 25 RV | 42.7 part PA | 200 | 20-32 | 7.0 |
| | | 40.0 part Glass Fiber | | | |
| | | 12.0 part Exolit OP 1314 | | | |
| | | 5.0 parts Prenifor EPFR-MPP300 | | | |
| | | 0.3 parts Irganox B1171 | | | |

Comparing Examples 20 and 21 with Example 22 demonstrates the advantages of improved ease of processing using the 25 RV feedstock polymer as evidenced by the reduced % maximum torque and reduced nozzle Pressure.

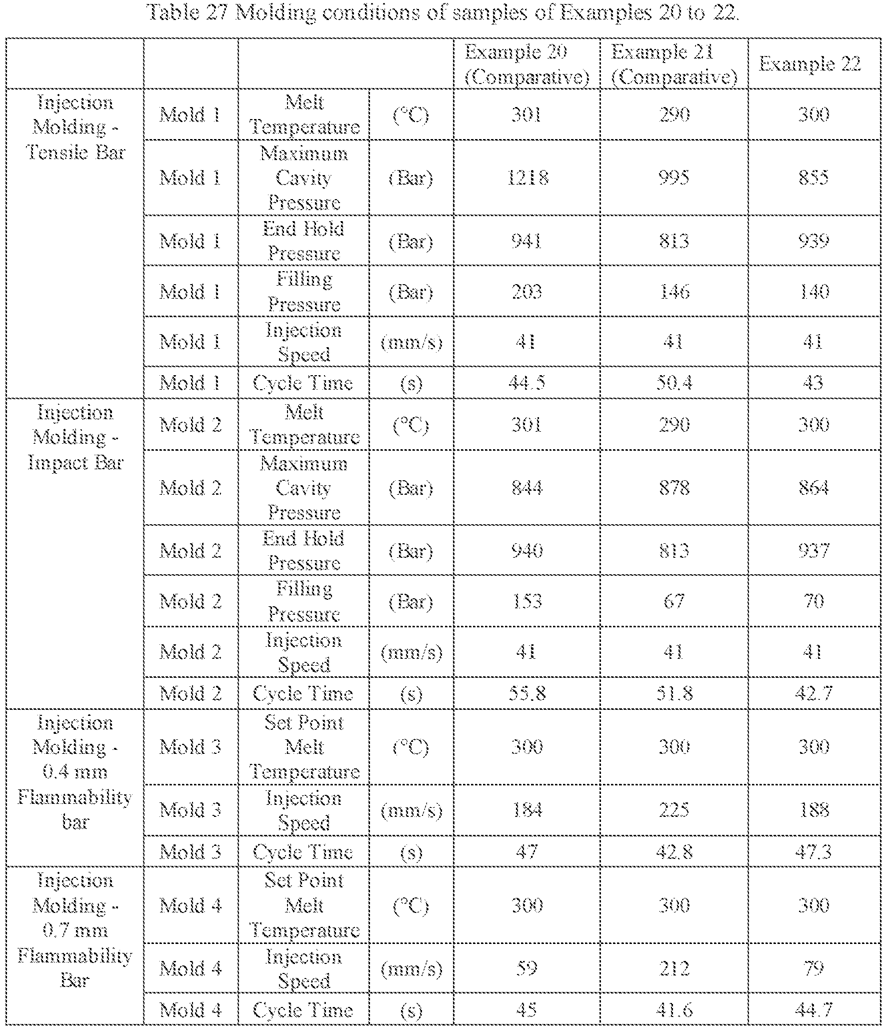

Comparing Examples 20 and 21 with Example 22 demonstrates the advantages of improved ease of processing using the 25 RV feedstock polymer as evidenced by the generally reduced filling pressures and/or cycle times.

**Table 28. Flammability ratings for Examples 20 to 22.**

| | UL 94V | UL 94V | UL 94V | UL 94V | UL 94V | UL 94V |
|---|---|---|---|---|---|---|
| | 0.4 mm | 0.4 mm | 0.4 mm | 0.7 mm | 0.7 mm | 0.7 mm |
| | 48hr/23°C | 168hr/70°C | Overall | 48hr/23°C | 168hr/70°C | Overall |
| Example 20 (Comparative) | V-NOT | V-NOT | V-NOT | V-NOT | V-NOT | V-NOT |
| Example 21 (Comparative) | V-NOT | V-NOT | V-NOT | V-NOT | V-NOT | V-NOT |
| Example 22 | V-NOT | V-NOT | V-NOT | V-NOT | V-NOT | V-NOT |

Comparing Examples 20 and 21 with Example 22 demonstrates the comparable Flammability performances.

**Table 29. Mechanical properties for Examples 20 to 22.**

| | Yield Stress | Yield Strain | Tensile Strength | Stress at break | Strain at break | Tensile Modulus | IZOD |
|---|---|---|---|---|---|---|---|
| | N/mm² | % | N/mm² | N/mm² | % | N/mm² | ISO 180/1U |
| Example 20 (Comparative) | - | - | 186.2 | 185.8 | 2.2 | 13509 | 57.8 |
| Example 21 (Comparative) | - | - | 181.4 | 181.0 | 2.1 | 13641 | 43.4 |
| Example 22 | - | - | 194.2 | 193.9 | 2.0 | 13730 | 48.0 |

Comparing Examples 20 and 21 with Example 22 demonstrates that the mechanical properties are still acceptable, and that some properties are improved.

Overall, comparing Examples 20 and 21 to Example 20 demonstrates the improved ease of processing from using the 25 RV feedstock polymer at both compounding and molding whilst maintaining useful mechanical properties, while some properties are improved. Should flammability properties not meet the desired performance, the improved ease of processing widens the processing window to one skilled in the art to allow them to add further flame-retardant additives to meet the balance of acceptable processing, flammability and mechanical performance required.

### Example 23. Properties of fibers formed from flame-retardant polyamide compositions.

In this Example, fibers are melt-spun using N66 polyamide having various RVs and including various amounts of Exolit^{®} OP 945 flame-retardant additive in a range of 0-15 wt%, along with 0.3 wt% Irganox^{®} B1171 polymer additive. No glass fibers were present in the compositions. For the filled N66 resin prepared, the RVs tested are 20 RV, 25 RV, 35 RV, and 48 RV. The fibers are drawn to obtain round cross-section continuous filament that was 4 denier per filament (dpf).

Breaking strength measurements are conducted on continuous multi-filament fibers according to ASTM D885 - Standard Test Methods for Tire Cords, Tire Cord Fabrics, and Industrial Filament Yarns Made from Manufactured Organic-Base Fibers. The flame resistance performance testing was performed using ASTM D6413 - Standard Test Method for Flame Resistance of Textiles (Vertical Test). Woven fabric specimens are prepared from 2" staple spun yarns containing 50 wt.% nylon-6,6-based fiber (RV values in Table 30) and 50 wt.% flame-retardant rayon (commercially available from Lenzing FR; Lenzing Group, Lenzing, Austria). The tested woven fabric specimens have 7.0 oz/yd² twill weave.

Table 30 lists the fiber mechanical strength (or breaking strength) along with the flame resistance data for drawn fibers from the N66 polyamide resins having varying RVs and flame-retardant additive levels.

**Table 30. Mechanical strength and flame resistance properties for fibers formed from flame-retardant polyamide compositions.**

| Example | Polyamide RV | FR additive (wt.%) | Draw ratio | Fiber tenacity (g/den) | Fiber elongation at break (%) | Pressure at spin pack (Psi) | After-flame time (sec) | Char length (inch) |
|---|---|---|---|---|---|---|---|---|
| 23(a) | 48 | 0 | 5.0 | 7.5 | 20 | 3500 | 60+ | 12 |
| 23(b) | 48 | 2 | 4.8 | 6.5 | 17 | 3800 | 60+ | 12 |
| 23(c) | 48 | 5 | 4.5 | 5.5 | 17 | 4300 | 60+ | 12 |
| 23(d) | 48 | 7 | 4.2 | 4.9 | 14 | 4900 | 60+ | 12 |
| 23(e) | 48 | 10 | 3.9 | 4.5 | 12 | 5500 | 30 | 8 |
| 23(f) | 48 | 15 | not spinnable | - | - | - | - | - |
| 23(g) | 35 | 0 | 5.2 | 7.6 | 25 | 3000 | 60+ | 12 |
| 23(h) | 35 | 2 | 5.0 | 6.7 | 20 | 3200 | 60+ | 12 |
| 23(i) | 35 | 5 | 4.7 | 6.0 | 18 | 3500 | 60+ | 12 |
| 23(j) | 35 | 7 | 4.4 | 5.4 | 15 | 3900 | 45 | 10 |
| 23(k) | 35 | 10 | 4.1 | 4.8 | 15 | 4500 | 20 | 7 |
| 23(l) | 35 | 15 | 3.7 | 4.0 | 12 | 5000 | 1 | 6 |
| 23(m) | 25 | 0 | 5.4 | 7.8 | 28 | 2500 | 60+ | 12 |
| 23(n) | 25 | 2 | 5.2 | 7.5 | 25 | 2700 | 60+ | 12 |
| 23(o) | 25 | 5 | 4.9 | 7.0 | 22 | 2900 | 45 | 10 |
| 23(p) | 25 | 7 | 4.7 | 6.5 | 22 | 3200 | 20 | 8 |
| 23(q) | 25 | 10 | 4.5 | 62 | 18 | 3500 | 5 | 6 |
| 23(r) | 25 | 15 | 4.2 | 5.8 | 16 | 4000 | 0 | 5 |
| 23(s) | 20 | 0 | 5.5 | 8.0 | 30 | 2200 | 60+ | 12 |
| 23(t) | 20 | 2 | 5.3 | 7.7 | 25 | 2200 | 60+ | 12 |
| 23(u) | 20 | 5 | 5.0 | 7.2 | 25 | 2400 | 30 | 8 |
| 23(v) | 20 | 7 | 4.9 | 6.7 | 20 | 2500 | 10 | 6.5 |
| 23(w) | 20 | 10 | 4.7 | 6.4 | 20 | 2700 | 0 | 5 |
| 23(x) | 20 | 15 | 4.5 | 6.0 | 20 | 3000 | 0 | 5 |

### Example 24. Properties of fibers formed from flame-retardant polyamide compositions.

In these Examples, fibers were melt-spun using N66 polyamide having various RVs and including various amounts of Exolit^{®} OP 945 flame-retardant additive in a range of 0-10 wt%. No glass fibers were present in the compositions. For the filled N66 resin prepared, the RVs tested were 25 RV, 38 RV, and 50 RV. The fibers were drawn to obtain round cross-section continuous filament that was 4 denier per filament (dpf).

Breaking strength measurements were conducted on continuous multi-filament fibers according to ASTM D885 - Standard Test Methods for Tire Cords, Tire Cord Fabrics, and Industrial Filament Yarns Made from Manufactured Organic-Base Fibers.

Table 31 lists the fiber mechanical strength (or breaking strength) along with the pack pressure data for drawn fibers from the N66 polyamide resins having varying RVs and flame-retardant additive levels.

**Table 31. Mechanical strength and spin pack average pressure for fibers formed from flame-retardant polyamide compositions.**

| Example | Polyamide RV | FR additive (wt.%) | Draw ratio | Fiber tenacity (g/den) | Fiber elongation at break (%) | Pressure at spin pack (Psi) |
|---|---|---|---|---|---|---|
| 24(a) | 50 | 0 | 5.5 | 8.93 | 14.12 | 2000 |
| 24(b) | | 5 | 5 | 6.43 | 13.94 | 3100 |
| 24(c) | 38 | 0 | 5.5 | 7.98 | 15.82 | 1000 |
| 24(d) | | 5 | 5 | 5.57 | 15.66 | 2200 |
| 24(e) | 25 | 0 | 5.5 | 7.22 | 16.16 | 500 |
| 24(f) | | 5 | 5 | 5.26 | 16.10 | 1800 |

## Claims

1. A flame-retardant polyamide composition comprising:
apolyamide that is 30 wt%to 99 wt% of the composition, the polyamide having a relative viscosity (RV) of ≥20 to ≤33 as measured as an 8.4 wt% solution in 90% formic acid, wherein the polyamide is nylon 66; and
one or more flame-retardant additives;
wherein the flame-retardant polyamide composition is substantially free of poly(arylene ether) and non-polyamide copolymers thereof, and the composition has aflame retardancy rating at 0.4 mm of V-2, V-1, or V-0 as measured by Underwriters' Laboratories Test No. UL 94, wherein the one or more flame-retardant additives are halogen-containing flame-retardant additives, halogen-containing flame-retardant additives with synergists, phosphorus-containing flame-retardant additives, inorganic flame-retardant additives, nitrogen-containing flame-retardant additives, nitrogen-containing flame-retardant additives with synergists, or a combination thereof, wherein the nitrogen-containing flame-retardant additives are selected from melamine cyanurate, melamine polyphosphate, melamine pyrophosphate, or mixtures thereof.

2. The composition of claim 1, wherein the composition is substantially free of styrenic copolymers, polyolefins, non-polyamide polyesters, and derivatives thereof and/or wherein the composition has a flame retardancy rating at 0.4 mm of V -0 as measured by Underwriters' Laboratories TestNo. UL 94.

3. The composition of any one of claims 1-2, wherein the polyamide has a RV of ≥20 to ≤30 as measured as an 8.4 wt% solution in 90% formic acid.

4. The composition of any one of claims 1-3, wherein the flame-retardant polyamide composition is a fiber.

5. The composition of any one of claims 1-4, wherein the composition is substantially free of reinforcing fillers or free of glass fibers and the amount of one or more flame-retardant additives is 3 wt% to 40 wt%.

6. The composition of any one of claims 1-5, wherein the polyamide is 35 wt%to 96 wt% of the composition.

7. The composition ofany one of claims 1-4 or 6, wherein the one ormore flame-retardant additives are 1 wt% to 50 wt% of the composition.

8. The composition of any one ofclaims 1-7, wherein the one or more flame-retardant additives are chosen from melamine cyanurate, aluminum diethylphosphinate, melamine polyphosphate, bromopolystyrene, antimony trioxide, dehydrated zinc borate, and a combination thereof.

9. The composition ofany one ofclaims 1-4 or 6-8, further comprising one ormore reinforcing fillers; preferably wherein the one ormore reinforcing fillers are carbon, glass, fibrous materials, Kevlar, cellulose, graphene, silicates, nanotubes, diamonds, ora combination thereof.

10. The composition of claim 5, wherein the composition is substantially free of reinforcing fillers, wherein the reinforcing fillers are carbon, fibrous materials, Kevlar, cellulose, graphene, silicates, nanotubes, diamonds, or a combination thereof.

11. The composition of claim 9, wherein the reinforcing filler is glass fibers and/or wherein the one ormore reinforcing fillers are 0.1 to 62 wt% of the composition.

12. The composition of any one of claims 1-11, further comprising one ormore processability additives.

13. A method of making the flame-retardant polyamide composition of any one of claims 1-12, the method comprising:
combining the polyamide with the one or more flame-retardant additives to form the flame-retardant polyamide composition.

14. The flame-retardant polyamide composition according to claim 1 wherein the polyamide is
nylon 66 that is 80 wt%to 99 wt% of the composition, the nylon 66 having an RV of ≥20 to ≤33 as measured as an 8.4 wt% solution in 90% formic acid; and
the one or more flame-retardant additives are 1wt%to20wt% of the composition, the one or more flame-retardant additives chosen from melamine cyanurate, aluminum diethylphosphinate, melamine polyphosphate, bromopolystyrene, antimony trioxide, dehydrated zinc borate, and a combination thereof;
wherein the composition is substantially free of glass fibers, the composition is substantially free of poly(arylene ether) and non-polyamide copolymers thereof, and the composition has a flame retardancy rating at 0.4 mm of V-0 as measured by Underwriters' Laboratories Test No. UL 94.

15. A flame-retardant polyamide composition according to claim 1 wherein the polyamide is nylon 66 that is 30 wt% to 80 wt% of the composition, the nylon 66 having an RV of ≥20 to ≤33 as measured as an 8.4 wt% solution in 90% formic acid;
the one or more flame-retardant additives are about 10 wt% to 50 wt% of the composition, the one or more flame-retardant additives chosen from melamine cyanurate, aluminum diethylphosphinate, melamine polyphosphate, bromopolystyrene, antimony trioxide, dehydrated zinc borate, and a combination thereof; and
a glass fiber reinforcing filler that is 1 wt% to 40 wt% of the composition; wherein the composition is substantially free of poly (arylene ether) and non-polyamide copolymers thereof, and the composition has aflame retardancy rating at 0.4 mm of V-0 as measured by Underwriters' Laboratories Test No. UL94.

## Patentansprüche

1. Flammhemmende Polyamidzusammensetzung, umfassend:
ein Polyamid, das 30 Gew.-% bis 99 Gew.-% der Zusammensetzung ausmacht, wobei das Polyamid eine relative Viskosität (RV) von ≥20 bis ≤33, wie als eine Lösung mit 8,4 Gew.-% in 90-%-iger Ameisensäure gemessen, aufweist, wobei das Polyamid Nylon 66 ist; und
ein oder mehrere flammhemmende Additive;
wobei die flammhemmende Polyamidzusammensetzung im Wesentlichen frei von Poly(arylenether) und Nicht-Polyamid-Copolymeren davon ist, und die Zusammensetzung eine Flammenhemmungsbewertung bei 0,4 mm von V-2, V-1 oder V-0, wie mit Underwriters' Laboratories Test Nr. UL 94 gemessen, aufweist, wobei das eine oder mehrere flammhemmende Additiven halogenhaltige flammhemmende Additive, halogenhaltige flammhemmende Additive mit Synergisten, phosphorhaltige flammhemmende Additive, anorganische flammhemmende Additive, stickstoffhaltige flammhemmende Additive, stickstoffhaltige flammhemmende Additive mit Synergisten oder eine Kombination davon ist/sind, wobei die stickstoffhaltigen flammhemmenden Additive aus Melamincyanurat, Melaminpolyphosphat, Melaminpyrophosphat oder Mischungen davon ausgewählt sind.

2. Zusammensetzung nach Anspruch 1, wobei die Zusammensetzung im Wesentlichen frei von Styrolcopolymeren, Polyolefinen, Nicht-Polyamid-Polyestern und Derivaten davon ist, und/oder wobei die Zusammensetzung eine Flammenhemmungsbewertung bei 0,4 mm von V-0, wie mit Underwriters' Laboratories Test Nr. UL 94, aufweist.

3. Zusammensetzung nach einem der Ansprüche 1-2, wobei das Polyamid eine RV von ≥20 bis ≤30, wie als Lösung mit 8,4 Gew.-% in 90-%-iger Ameisensäure gemessen, aufweist.

4. Zusammensetzung nach einem der Ansprüche 1-3, wobei die flammhemmende Polyamidzusammensetzung eine Faser ist.

5. Zusammensetzung nach einem der Ansprüche 1-4, wobei die Zusammensetzung im Wesentlichen frei von verstärkenden Füllstoffen oder frei von Glasfasern ist und die Menge eines oder mehrerer flammhemmender Additive 3 Gew.-% bis 40 Gew.-% beträgt.

6. Zusammensetzung nach einem der Ansprüche 1-5, wobei das Polyamid 35 Gew.-% bis 96 Gew.-% der Zusammensetzung ausmacht.

7. Zusammensetzung nach einem der Ansprüche 1-4 oder 6, wobei das eine oder mehrere flammhemmenden Additive 1 Gew.-% bis 50 Gew.-% der Zusammensetzung ausmachen.

8. Zusammensetzung nach einem der Ansprüche 1-7, wobei das eine oder mehrere flammhemmende Additive aus Melamincyanurat, Aluminiumdiethylphosphinat, Melaminpolyphosphat, Brompolystyrol, Antimontrioxid, dehydriertem Zinkborat und einer Kombination davon ausgewählt ist/sind.

9. Zusammensetzung nach einem der Ansprüche 1-4 oder 6-8, weiter einen oder mehrere verstärkende Füllstoffe umfassend; wobei der eine oder mehrere verstärkende Füllstoffe vorzugsweise Kohlenstoff, Glas, Fasermaterialien, Kevlar, Zellulose, Graphen, Silikate, Nanoröhren, Diamanten oder eine Kombination davon sind.

10. Zusammensetzung nach Anspruch 5, wobei die Zusammensetzung im Wesentlichen frei von verstärkenden Füllstoffen ist, wobei die verstärkenden Füllstoffe Kohlenstoff, Fasermaterialien, Kevlar, Zellulose, Graphen, Silikate, Nanoröhren, Diamanten oder eine Kombination davon sind.

11. Zusammensetzung nach Anspruch 9, wobei der verstärkende Füllstoff Glasfasern sind, und/oder wobei der eine oder mehrere verstärkende Füllstoffe 0,1 bis 62 Gew.-% der Zusammensetzung ausmachen.

12. Zusammensetzung nach einem der Ansprüche 1-11, weiter ein oder mehrere Verarbeitbarkeitsadditive umfassend.

13. Verfahren zum Herstellen der flammhemmenden Polyamidzusammensetzung nach einem der Ansprüche 1-12, wobei das Verfahren umfasst:
Kombinieren des Polyamids mit dem einen oder den mehreren flammhemmenden Additiven, um die flammhemmende Polyamidzusammensetzung zu bilden.

14. Flammhemmende Polyamidzusammensetzung nach Anspruch 1, wobei das Polyamid Nylon 66 ist, das 80 Gew.-% bis 99 Gew.-% der Zusammensetzung ausmacht, wobei das Nylon 66 eine RV von ≥20 bis ≤33, wie als Lösung mit 8,4 Gew.-% in 90-%-iger Ameisensäure gemessen, aufweist; und
wobei das eine oder mehrere flammhemmende Additive 1 Gew-% bis 20 Gew-% der Zusammensetzung ausmachen, wobei das eine oder mehrere flammhemmende Additive aus Melamincyanurat, Aluminiumdiethylphosphinat, Melaminpolyphosphat, Brompolystyrol, Antimontrioxid, dehydriertem Zinkborat und einer Kombination davon ausgewählt ist/sind;
wobei die Zusammensetzung im Wesentlichen frei von Glasfasern ist, die Zusammensetzung im Wesentlichen frei von Poly(arylenether) und Nicht-Polyamid-Copolymeren davon ist, und die Zusammensetzung eine Flammenhemmungsbewertung bei 0,4 mm von V-0, wie mit Underwriters' Laboratories Test Nr. UL 94 gemessen, aufweist.

15. Flammhemmende Polyamidzusammensetzung nach Anspruch 1, wobei das Polyamid Nylon 66 ist, das 30 Gew.-% bis 80 Gew.-% der Zusammensetzung ausmacht, wobei das Nylon 66 eine RV von ≥20 bis ≤33, wie als Lösung mit 8,4 Gew.-% in 90-%-iger Ameisensäure gemessen, aufweist;
wobei das eine oder mehrere flammhemmende Additive etwa 10 Gew.-% bis 50 Gew.-% der Zusammensetzung ausmachen, wobei das eine oder mehrere flammhemmende Additive aus Melamincyanurat, Aluminiumdiethylphosphinat, Melaminpolyphosphat, Brompolystyrol, Antimontrioxid, dehydriertem Zinkborat und einer Kombination davon ausgewählt ist/sind; und
ein glasfaserverstärkter Füllstoff, der 1 Gew.-% bis 40 Gew.-% der Zusammensetzung ausmacht; wobei die Zusammensetzung im Wesentlichen frei von Poly(arylenether) und Nicht-Polyamid-Copolymeren davon ist, und die Zusammensetzung eine Flammenhemmungsbewertung bei 0,4 mm von V-0, wie mit Underwriters' Laboratories Test Nr. UL94 gemessen, aufweist.

## Revendications

1. Composition de polyamide ignifuge comprenant :
un polyamide qui représente 30 % en poids à 99 % en poids de la composition, le polyamide présentant une viscosité relative (RV) de ≥ 20 à ≤ 33 telle que mesurée en tant que solution à 8,4 % en poids dans de l'acide formique à 90 %, dans laquelle le polyamide est du nylon 66 ; et
un ou plusieurs additifs ignifuges ;
dans laquelle la composition de polyamide ignifuge est sensiblement exempte de poly(éther d'arylène) et de copolymères non-polyamides de celui-ci, et la composition présente un indice d'ignifugation à 0,4 mm de V-2, V-1 ou V-0 tel que mesuré par le Test n° UL94 de Underwriters' Laboratories, dans laquelle les un ou plusieurs additifs ignifuges sont des additifs ignifuges contenant des halogènes, des additifs ignifuges contenant des halogènes avec des synergistes, des additifs ignifuges contenant du phosphore, des additifs ignifuges inorganiques, des additifs ignifuges contenant de l'azote, des additifs ignifuges contenant de l'azote avec des synergistes, ou une combinaison de ceux-ci, dans laquelle les additifs ignifuges contenant de l'azote sont choisis parmi le cyanurate de mélamine, le polyphosphate de mélamine, le pyrophosphate de mélamine ou des mélanges de ceux-ci.

2. Composition selon la revendication 1, dans laquelle la composition est sensiblement exempte de copolymères styréniques, de polyoléfines, de polyesters non-polyamides et de leurs dérivés, et/ou dans laquelle la composition présente un indice d'ignifugation à 0,4 mm de V-0 tel que mesuré par le Test n° UL94 de Underwriters' Laboratories.

3. Composition selon l'une quelconque des revendications 1-2, dans laquelle le polyamide présente une RV de ≥ 20 à ≤ 30 telle que mesurée en tant que solution à 8,4 % en poids dans de l'acide formique à 90 %.

4. Composition selon l'une quelconque des revendications 1-3, dans laquelle la composition de polyamide ignifuge est une fibre.

5. Composition selon l'une quelconque des revendications 1-4, dans laquelle la composition est sensiblement exempte de charges de renforcement ou exempte de fibres de verre et la quantité d'un ou plusieurs additifs ignifuges est de 3 % en poids à 40 % en poids.

6. Composition selon l'une quelconque des revendications 1-5, dans laquelle le polyamide représente 35 % en poids à 96 % en poids de la composition.

7. Composition selon l'une quelconque des revendications 1-4 ou 6, dans laquelle les un ou plusieurs additifs ignifuges représentent 1 % en poids à 50 % en poids de la composition.

8. Composition selon l'une quelconque des revendications 1-7, dans laquelle les un ou plusieurs additifs ignifuges sont choisis parmi le cyanurate de mélamine, le diéthylphosphinate d'aluminium, le polyphosphate de mélamine, le bromopolystyrène, le trioxyde d'antimoine, le borate de zinc déshydraté et une combinaison de ceux-ci.

9. Composition selon l'une quelconque des revendications 1-4 ou 6-8, comprenant en outre une ou plusieurs charges de renforcement ; de préférence, dans laquelle les une ou plusieurs charges de renforcement sont du carbone, du verre, des matériaux fibreux, du Kevlar, de la cellulose, du graphène, des silicates, des nanotubes, des diamants ou une combinaison de ceux-ci.

10. Composition selon la revendication 5, dans laquelle la composition est sensiblement exempte de charges de renforcement, dans laquelle les charges de renforcement sont du carbone, des matériaux fibreux, du Kevlar, de la cellulose, du graphène, des silicates, des nanotubes, des diamants ou une combinaison de ceux-ci.

11. Composition selon la revendication 9, dans laquelle la charge de renforcement est des fibres de verre et/ou dans laquelle les une ou plusieurs charges de renforcement représentent 0,1 à 62 % en poids de la composition.

12. Composition selon l'une quelconque des revendications 1-11, comprenant en outre un ou plusieurs additifs de transformabilité.

13. Procédé de fabrication de la composition de polyamide ignifuge selon l'une quelconque des revendications 1-12, le procédé comprenant :
la combinaison du polyamide avec les un ou plusieurs additifs ignifuges pour former la composition de polyamide ignifuge.

14. Composition de polyamide ignifuge selon la revendication 1, dans laquelle le polyamide est du nylon 66 qui représente 80 % en poids à 99 % en poids de la composition, le nylon 66 présentant une RV de > 20 à ≤ 33 telle que mesurée en tant que solution à 8,4 % en poids dans de l'acide formique à 90 % ; et
les un ou plusieurs additifs ignifuges représentent 1 % en poids à 20 % en poids de la solution, les un ou plusieurs additifs ignifuges choisis parmi le cyanurate de mélamine, le diéthylphosphinate d'aluminium, le polyphosphate de mélamine, le bromopolystyrène, le trioxyde d'antimoine, le borate de zinc déshydraté et une combinaison de ceux-ci ;
dans laquelle la composition est sensiblement exempte de fibres de verre, la composition est sensiblement exempte de poly(éther d'arylène) et de copolymères non-polyamides de celui-ci, et la composition présente un indice d'ignifugation à 0,4 mm de V-0 tel que mesuré par le test n° UL94 de Underwriters' Laboratories.

15. Composition de polyamide ignifuge selon la revendication 1, dans laquelle le polyamide est du nylon 66 qui représente 30 % en poids à 80 % en poids de la composition, le nylon 66 présentant une RV ≥ 20 à ≤ 33 telle que mesurée en tant que solution à 8,4 % en poids dans de l'acide formique à 90 % ;
les un ou plusieurs additifs ignifuges représentent environ 10 % en poids à 50 % en poids de la composition, les un ou plusieurs additifs ignifuges étant choisis parmi le cyanurate de mélamine, le diéthylphosphinate d'aluminium, le polyphosphate de mélamine, le bromopolystyrène, le trioxyde d'antimoine, le borate de zinc déshydraté et une combinaison de ceux-ci ; et
une charge de renforcement en fibres de verre qui représente 1 % en poids à 40 % en poids de la composition ; dans laquelle la composition est sensiblement exempte de poly(éther d'arylène) et de copolymères non-polyamides de celui-ci, et la composition présente un indice d'ignifugation à 0,4 mm de V-0 tel que mesuré par le test n° UL94 de Underwriters' Laboratories.
